# EUROPÄISCHE PATENTSCHRIFT

(11) **EP 3 092 406 B1**
(45) Veröffentlichungstag und Bekanntmachung des Hinweises auf die Patenterteilung: **26.08.2020**
(21) Anmeldenummer: 14815065.9
(22) Anmeldetag: 10.12.2014
(51) Int. Cl.: F03G 7/06, B60R 1/072

(54) **AKTUATOREINRICHTUNG FÜR EINE RÜCKBLICKVORRICHTUNG EINES KRAFTFAHRZEUGS SOWIE RÜCKBLICKVORRICHTUNG FÜR EIN KRAFTFAHRZEUG**
ACTUATING DEVICE FOR A REAR VIEW DEVICE OF A MOTOR VEHICLE AND REAR VIEW DEVICE FOR A MOTOR VEHICLE
DISPOSITIF D'ACTIONNEUR POUR UN SYSTÈME DE RÉTROVISEUR DE VÉHICULE AUTOMOBILE ET SYSTÈME DE RÉTROVISEUR DE VÉHICULE AUTOMOBILE

(30) Priorität: 13.12.2013 EP 13197262
(43) Veröffentlichungstag der Anmeldung: 16.11.2016
(73) Patentinhaber: SMR Patents S.à.r.l., 2453 Luxembourg (LU)
(72) Erfinder: WIECZOREK, Romeo, 73732 Esslingen (DE)
(74) Vertreter: Holzwarth-Rochford, Andreas
(86) Internationale Anmeldenummer: PCT/IB2014/066767
(87) Internationale Veröffentlichungsnummer: WO 2015/087260

(56) Entgegenhaltungen:
- EP-A1- 0 173 433
- WO-A1-00/25164
- WO-A1-01/12985
- WO-A1-03/093648
- US-A1- 2009 168 198

## Beschreibung

Die Erfindung betrifft eine Aktuatoreinrichtung für eine Rückblickvorrichtung, umfassend mindestens ein Haltemittel, an dem ein Rückblickmittel festlegbar oder festgelegt ist und das relativ zu einer Gehäusekomponente der Rückblickvorrichtung bewegbar gelagert ist, mindestens eine Stellvorrichtung umfassend zumindest eine erste Stelleinheit mit mindestens einem ersten Stellmittel und zumindest eine zweite Stelleinheit mit mindestens einem zweiten Stellmittel zur Bewegung des Haltemittels relativ zu der Gehäusekomponente, wobei das erste Stellmittel und das zweite Stellmittel jeweils zumindest ein Formgedächtniselement umfassen und die erste Stelleinheit und die zweite Stelleinheit mechanisch in Reihe geschaltet zwischen der Gehäusekomponente und dem Haltemittel angeordnet sind. Darüber hinaus betrifft die Erfindung eine Rückblickvorrichtung für ein Kraftfahrzeug mit einer erfindungsgemäßen Aktuatoreinrichtung.

Aus dem Stand der Technik sind unterschiedliche Aktuatoreinrichtungen für eine Rückblickeinrichtung, insbesondere einem Außenspiegel eines Kraftfahrzeugs, bekannt. Insbesondere sind solche Aktuatoreinrichtungen bekannt, bei welchen sogenannte Formgedächtniselemente als Stellmittel eingesetzt werden.

So offenbart die WO 00/25164 eine Aktuatoreinrichtung, bei der vier Stellmittel vorgesehen sind, wobei jedes Stellmittel einem Längskörper zugeordnet ist. Bei den bekannten Stellmitteln handelt es sich um Formgedächtniselemente, die durch Bestromen oder durch Erwärmen bzgl. ihrer Erstreckung veränderbar sind. Hierbei Die als Formgedächtniselemente ausgebildeten Stellmittel verändern ihre Erstreckung jedoch nicht in Abhängigkeit von einer Temperatur oder einer Stromstärke, sondern bei Überschreiten einer Schwellentemperatur oder einer Schwellenstromstärke. Somit setzen sie unmittelbar ihr komplettes Formveränderungspotential um. Ein Feineinstellen der Anordnung des Rückblickmittels ist hierdurch zumindest erschwert.

Auch die DE 699 00 153 T2 offenbart eine Aktuatoreinrichtung, die an einem Kraftfahrzeugrückblickspiegel mit Abblendvorrichtung mit Formgedächtnisstruktur eingesetzt wird. Zur Erreichung der Abblendfunktion ist vorgesehen, dass eine Schubstange über ein Formgedächtniselement aktuiert wird. Wird das Formgedächtniselement bestromt, und damit erwärmt, wird die Schubstange so bewegt, dass ein Rückspiegel in die Abblendposition überführt wird. Erfolgt keine Bestromung, so wird der Spiegel mittels einer Feder in die Nicht-Abblendposition überführt. Diese Aktuatoreinrichtung ermöglicht jedoch ebenfalls nur eine "digitale" Veränderung des Stellweges zwischen ausgelenkt und nicht ausgelenkt.

Darüber hinaus offenbart die DE 10 2010 047 040 A1 eine gattungsgemäße Aktuatoreinrichtung, die in einem Aktuatorsystem zur Erzeugung von Positionierbewegungen eingesetzt wird. Zur Vergrößerung eines Stellbereichs des Aktuatorsystems wird vorgeschlagen, dass mehrere Einzelaktuatoren seriell nachgeschaltet sind. Nachteilig ist jedoch, dass eine große Anzahl von Einzelaktoren notwendig ist, um einen großen Stellbereich abdecken zu können.

Die US 5,396,769 offenbart schließlich eine weitere gattungsgemäße Aktuatoreinrichtung in Form eines Rotationsaktuators. Es wird ebenfalls vorgeschlagen, dass mehrere einzelne Stellelemente funktional in Reihe geschaltet werden, um einen vergrößerten Stellbereich bereitzustellen. Auch dieser Aktuator weist jedoch den Nachteil auf, dass zur Erreichung eines vergleichsweise großen Stellweges eine große Anzahl von Einzelstelleinheiten notwendig ist.

Aufgabe der Erfindung ist es daher, die aus dem Stand der Technik bekannten gattungsgemäßen Aktuatoreinrichtungen derartig weiterzuentwickeln, dass die Nachteile des Stands der Technik überwunden werden, insbesondere eine Aktuatoreinrichtung für eine Rückblickvorrichtung sowie eine Rückblickvorrichtung für ein Kraftfahrzeug mit einer derartigen Aktuatoreinrichtung bereitgestellt wird, bei der die Einstellbarkeit der Anordnung des Rückblickmittels verbessert ist, insbesondere ein großer Stellweg mit einer reduzierten Anzahl von Stellmitteln ermöglicht wird.

Diese Aufgabe wird bei einer eingangs genannten Aktuatoreinrichtung gemäß dem Anspruch 1 gelöst.

Dabei ist eine erfindungsgemäße Aktuatoreinrichtung gekennzeichnet durch zumindest einen Lenkkörper, der mit einem ersten Ende mechanisch mit dem Haltemittel und mit einem zweiten Ende mechanisch mit der Stellvorrichtung, insbesondere der zweiten Stelleinheit und/oder dem zweiten Stellmittel, verbindbar ist oder verbunden ist, um zumindest eine Stellbewegung der Stellvorrichtung, insbesondere der ersten Stelleinheit, vorzugsweise des ersten Stellmittels, und/oder der zweiten Stelleinheit, vorzugsweise des zweiten Stellmittels, auf das Haltemittel zu übertragen.

Weiterhin weist die Aktuatoreinrichtung zumindest auf, einen ersten Stellkörper, mittels dem die erste Stelleinheit, insbesondere das erste Stellmittel, und die zweite Stelleinheit, insbesondere das zweite Stellmittel, zumindest indirekt mechanisch miteinander verbunden sind und/oder wobei die erste Stelleinheit, insbesondere das erste Stellmittel, mechanisch zwischen der Gehäusekomponente und dem ersten Stellkörper angeordnet ist.

Weiterhin ist die erfindungsgemäße Aktuatoreinrichtung gekennzeichnet durch zumindest einen zweiten Stellkörper, wobei zumindest ein Lenkkörper und/oder das Haltemittel in mechanischer Verbindung mit dem zweiten Stellkörper ist bzw. sind und/oder das zweite Stellmittel mechanisch zwischen dem ersten Stellkörper und dem zweiten Stellkörper angeordnet ist.

Auch wird mit der Erfindung vorgeschlagen, dass die Stellvorrichtung zumindest eine dritte Stelleinheit mit zumindest einem dritten, zumindest ein Formgedächtniselement umfassenden, Stellmittel umfasst, wobei die dritte Stelleinheit mechanisch zwischen der ersten Stelleinheit und der zweiten Stelleinheit anordbar ist oder angeordnet ist.

Bei der vorgenannten Ausführungsform ist insbesondere bevorzugt, dass eine Mehrzahl von dritten Stelleinheiten vorhanden ist und zumindest eine erste dritte Stelleinheit mechanisch zwischen der ersten Stelleinheit und zumindest einer zweiten dritten Stelleinheit angeordnet ist, wobei die zweite dritte Stelleinheit wiederum mechanisch zwischen der ersten dritten Stelleinheit und der zweiten Stelleinheit angeordnet ist.

Auch wird mit der Erfindung für die vorgenannten beiden Ausführungsformen vorgeschlagen, dass die dritte Stelleinheit einen von dem ersten maximalen Stellweg und dem zweiten maximalen Stellweg unterschiedlichen dritten maximalen Stellweg aufweist, insbesondere ein erster dritter maximaler Stellweg der ersten dritten Stelleinheit unterschiedlich zu einem zweiten dritten maximalen Stellweg der zweiten dritten Stelleinheit ist.

Weiterhin kann eine so ausgebildete Aktuatoreinrichtung auch gekennzeichnet sein durch zumindest einen dritten Stellkörper, mittels dem die dritte Stelleinheit, insbesondere das dritte Stellmittel, und die zweite Stelleinheit, insbesondere das zweite Stellmittel, vorzugsweise unmittelbar, mechanisch miteinander verbunden sind, wobei insbesondere der erste Stellkörper die erste Stelleinheit, vorzugsweise das erste Stellmittel, und die dritte Stelleinheit, vorzugsweise das dritte Stellmittel, insbesondere unmittelbar, miteinander verbindet und/oder eine Mehrzahl von dritten Stellkörpern vorhanden sind, wobei mittels zumindest eines der dritten Stellkörper zumindest zwei dritte Stelleinheiten, vorzugsweise zwei dritte Stellmittel, insbesondere unmittelbar, mechanisch miteinander verbunden sind.

Die Aktuatoreinrichtung ist dadurch gekennzeichnet, dass die Bewegbarkeit des ersten Stellkörpers relativ zu der Gehäusekomponente mittels zumindest eines ersten mechanischen Anschlags, die Bewegbarkeit des zweiten Stellkörpers und/oder des Lenkkörpers relativ zu dem ersten Stellkörper und/oder dem dritten Stellkörper mittels zumindest eines zweiten mechanischen Anschlags, die Bewegbarkeit des dritten Stellkörpers relativ zu dem ersten Stellkörper und/oder die Bewegbarkeit eines ersten dritten Stellkörpers relativ zu zumindest einem zweiten dritten Stellkörper mittels zumindest eines dritten mechanischen Anschlags begrenzt ist bzw. sind, insbesondere durch den ersten mechanischen Anschlag der erste maximale Stellweg, durch den zweiten mechanischen Anschlag der zweite maximale Stellweg und/oder den dritten mechanischen Anschlag der dritte maximale Stellweg, insbesondere mittels zumindest eines ersten dritten mechanischen Anschlags der erste dritte maximale Stellweg und/oder mittels eines zweiten dritten mechanischen Anschlags der zweite dritte maximale Stellweg festgelegt ist bzw. sind.

Darüber hinaus schlägt die Erfindung vor, dass die maximalen ersten, zweiten und/oder dritten Stellwege sich derartig unterscheiden, dass zumindest zwei maximale Stellwege sich um den Faktor 2 unterscheiden, vorzugsweise sich alle maximalen Stellwege so voneinander unterscheiden, dass ein maximaler Stellweg jeweils doppelt so groß ist wie ein weiterer maximaler Stellweg.

Die erfindungsgemäße Aktuatoreinrichtung ist kann dadurch gekennzeichnet, dass der erste mechanische Anschlag zumindest ein ortsfest zu der Gehäusekomponente angeordnetes erstes Anschlagelement, das mit zumindest einer komplementären ersten Struktur des ersten Stellkörpers wechselwirkt, umfasst, der zweite mechanische Anschlag zumindest ein ortsfest zu dem ersten Stellkörper und/oder dem dritten Stellkörper angeordnetes zweites Anschlagelement, das mit zumindest einer komplementären zweiten Struktur des zweiten Stellkörpers und/oder des Lenkkörpers wechselwirkt, umfasst, der dritte mechanische Anschlag zumindest ein ortsfest zu dem ersten Stellkörper angeordnetes drittes Anschlagelement, das mit zumindest einer komplementären dritten Struktur des dritten Stellkörpers wechselwirkt, umfasst, der erste dritte mechanische Anschlag zumindest ein ortsfest zu dem ersten Stellkörper angeordnetes erstes drittes Anschlagelement, das mit zumindest einer komplementären ersten dritten Struktur des ersten dritten Stellkörpers wechselwirkt umfasst, und/oder der zweite dritte mechanische Anschlag zumindest ein ortsfest zu dem ersten dritten Stellkörper angeordnetes zweites drittes Anschlagelement, das mit zumindest einer komplementären zweiten dritten Struktur des zweiten dritten Stellkörpers wechselwirkt, umfasst.

Die Aktuatoreinrichtung ist weiter dadurch gekennzeichnet, dass das erste Anschlagelement, das zweite Anschlagelement, das dritte Anschlagelement, das erste dritte Anschlagelement und/oder das zweite erste Anschlagelement zumindest eine Erhebung, zumindest einen Stift und/oder zumindest einen Zapfen umfasst bzw. umfassen und/oder die erste Struktur, die zweite Struktur, die dritte Struktur, die erste dritte Struktur und/oder die zweite dritte Struktur zumindest eine Oberfläche, zumindest eine Öffnung, zumindest ein Langloch und/oder zumindest eine Nut umfasst bzw. umfassen oder das erste Anschlagelement, das zweite Anschlagelement, das dritte Anschlagelement, das erste dritte Anschlagelement und/oder das zweite erste Anschlagelement zumindest eine Oberfläche, zumindest eine Öffnung, zumindest ein Langloch und/oder zumindest eine Nut umfasst und/oder umfassen und/oder die erste Struktur, die zweite Struktur, die dritte Struktur, die erste dritte Struktur und/oder die zweite dritte Struktur zumindest eine Erhebung, zumindest einen Stift und/oder zumindest einen Zapfen umfasst bzw. umfassen.

Weiterhin schlägt die Erfindung für die vorgenannten Ausführungsformen vor, dass das erste Anschlagelement, das zweite Anschlagelement, das dritte Anschlagelement, das erste dritte Anschlagelement, das zweite erste Anschlagelement, die erste Struktur, die zweite Struktur, die dritte Struktur, die erste dritte Struktur und/oder die zweite dritte Struktur als Führungselement wirkt bzw. als Führungselemente wirken, insbesondere zum Führen der Bewegung der ersten Stelleinheit, der zweiten Stelleinheit, der dritten Stelleinheit, des ersten Stellkörpers, des zweiten Stellkörpers, des dritten Stellkörpers und/oder des Lenkkörpers.

Auch wird mit der Erfindung vorgeschlagen, dass der erste Stellkörper, der zweite Stellkörper, der dritte Stellkörper, der erste dritte Stellkörper und/oder der zweite dritte Stellkörper flächenhaft ausgebildet ist bzw. sind und/oder zumindest zwei Stellkörper um eine, vorzugsweise durch zumindest ein Lagerelement festgelegte, gemeinsame Lagerachse drehbar gelagert sind.

Besonders bevorzugt ist, dass die Aktuatoreinrichtung zur Bewegung einer Rückblickvorrichtung eines Kraftfahrzeugs verwendbar ist.

Eine erfindungsgemäße Aktuatoreinrichtung kann auch dadurch gekennzeichnet sein, dass das Haltemittel platten- und/oder oder rahmenartig ausgebildet ist, das Rückblickmittel flächenhaft ausgebildet ist, zumindest einen Spiegel, zumindest eine Kamera und/oder zumindest eine Anzeigevorrichtung, wie ein Display, umfasst und/oder mittels der Aktuatoreinrichtung translatorisch, drehbar und/oder schwenkbar relativ zu der Gehäusekomponente und/oder von zumindest einer ersten Position in zumindest mindestens eine zweite Position relativ zur Gehäusekomponente bewegbar ist.

Weiterhin wird mit der Erfindung vorgeschlagen, dass die erste Stelleinheit zumindest zwei erste Stellmittel, die zweite Stelleinheit zumindest zwei zweite Stellmittel und/oder die dritte Stelleinheit zumindest zwei dritte Stellmittel umfasst, wobei mittels der zwei ersten Stellmittel der erste Stellweg in unterschiedliche, insbesondere entgegengesetzte Richtungen, veränderbar ist, mittels der zwei zweiten Stellmittel der zweite Stellweg in unterschiedliche, insbesondere entgegengesetzte Richtungen, veränderbar ist, und/oder mittels der dritten zweiten Stellmittel der dritte Stellweg in unterschiedliche, insbesondere entgegengesetzte Richtungen, veränderbar ist.

Eine bevorzugte Ausführungsform kann auch dadurch gekennzeichnet sein, dass die Formgedächtniselemente bei einem Bestromen oder Erwärmen ihre Erstreckung in zumindest eine, insbesondere parallel zu dem Stellweg der jeweiligen Stelleinheit verlaufenden, Haupterstreckungsrichtung verändern, wobei vorzugsweise die der Grad der Veränderung der Erstreckung in Abhängigkeit, vorzugsweise proportional zu einer Stromstärke des Bestromens und/oder einer Temperatur des Erwärmens ist.

Besonders bevorzugt ist, dass es eine Wirkrichtung der ersten Stelleinheit, der zweiten Stelleinheit und/oder der Stelleinheit, insbesondere des ersten Stellmittels, des zweiten Stellmittels und/oder des dritten Stellmittels im wesentlichen parallel, quer oder schräg zu zumindest einer Hauptebene des Halteelementes und/oder des Rückblickmittels verläuft.

Weiterhin schlägt die Erfindung vor, dass zumindest zwei Stellmittel, vorzugweise alle Stellmittel, gemeinsam oder unabhängig voneinander ansteuerbar oder angesteuert, insbesondere bestrombar und/oder erwärmbar, sind.

Eine besonders bevorzugte Ausführungsform ist gekennzeichnet durch zumindest eine, insbesondere zapfenartig ersteckte, Lagereinheit, wobei vorzugsweise die Lagereinheit mit einem ersten Ende an der Gehäusekomponente festlegbar oder festgelegt ist und an deren freien, dem ersten Ende gegenüberliegenden Ende das Haltemittel mittels der Aktuatoreinrichtung bewegbar, insbesondere im wesentlichen zentrisch, lagerbar oder gelagert ist.

Die vorgenannte Ausführungsform kann ferner gekennzeichnet sein durch zumindest zwei Stellvorrichtungen, wobei vorzugsweise mittels zumindest einer ersten Stellvorrichtung das Haltemittel um zumindest eine erste Achse drehbar und/oder schwenkbar ist und mittels zumindest einer zweiten Stellvorrichtung das Haltemittel um zumindest eine zweite, zur ersten Achse, vorzugweise orthogonal verlaufende Achse, drehbar und/oder schwenkbar ist, mittels der ersten Stellvorrichtung das Haltemittel gleichzeitig um die erste Achse und die zweite Achse drehbar und/oder schwenkbar ist und mittels der zweiten Stellvorrichtung das Haltemittel gleichzeitig um die erste Achse und die zweite Achse drehbar und/oder schwenkbar ist, wobei vorzugsweise eine gleichsinnige und/oder spiegelsymmetrische erste Bewegung der ersten Stellvorrichtung in Bezug auf eine zweite Bewegung der zweiten Stellvorrichtung im Vergleich zu der zweiten Bewegung zu einer gegensinnigen Drehung / Schwenkung um die erste Achse und/oder der zweiten Achse führt, mittels zumindest einer ersten Stellvorrichtung das Haltemittel in zumindest eine erste Richtung bewegbar ist und mittels zumindest einer zweiten Stellvorrichtung das Haltemittel in zumindest eine zweite, zur ersten Richtung, insbesondere orthogonale Richtung bewegbar ist, die Stellvorrichtungen im Wesentlichen spiegelsymmetrisch zu einer quer zur Längsterstreckungsrichtung der Lagereinheit verlaufenden Spiegelachse am Haltemittel angeordnet sind und/oder die Stellvorrichtungen im Wesentlichen spiegelsymmetrisch zu einer quer zur Längsterstreckungsrichtung der Lagereinheit verlaufenden Richtung angeordnet sind.

Weiterhin wird mit der Erfindung vorgeschlagen, dass mindestens ein Lenkkörper zwei, insbesondere L-förmig zueinander angeordnete, Lenkschenkel umfasst, dass an mindestens einem ersten Lenkschenkel ein Festlegeelement der Stellvorrichtung und/oder ein Stellkörper der Stellvorrichtung festlegbar oder festgelegt ist, dass der zweite Lenkschenkel am Haltemittel festlegbar ist, und/oder dass der erste Lenkschenkel und der zweite Lenkschenkel an einer gemeinsamen Lenkschenkelachse drehbar anordenbar oder angeordnet sind.

Schließlich wird für die Aktuatoreinrichtung vorgeschlagen, dass der mindestens eine Lenkkörper einen Kunststoff, eine Keramik und/oder ein Metall umfasst.

Darüber hinaus liefert die Erfindung eine Rückblickvorrichtung für ein Kraftfahrzeug, umfassend zumindest eine Gehäusekomponente und ein mittels zumindest einer Aktuatoreinrichtung relativ zu der Gehäusekomponente bezüglich zumindest einer Raumrichtung, vorzugweise zwei und/oder drei Raumrichtungen bewegbare, vorzugsweise dreh- und/oder schwenkbares Haltemittel für zumindest ein Rückblickmittel, wobei als Aktuatoreinrichtung zumindest eine erfindungsgemäße Aktuatoreinrichtung verwenbar oder verwendet ist.

Der Erfindung liegt somit die überraschende Erkenntnis zugrunde, dass die Aktuatoreinrichtung besonders kompakt ausgestaltet werden kann, obwohl ein vergleichsweise großer Stellweg ermöglicht wird, und gleichzeitig der Stellweg in vergleichsweise kleinen Schritten veränderbar ist, also eine gute Feinsteuerung ermöglicht wird, indem die maximalen Stellwege einzelner Stelleinheiten unterschiedlich groß ausgebildet werden. Wie bereits aus dem Stand der Technik bekannt ist, kann dadurch, dass mindestens zwei Stelleinheiten bzw. deren Stellmittel bzgl. ihrer Haupterstreckungsrichtung im Wesentlichen mechanisch in Reihe, also "hintereinander" angeordnet und demselben Lenkmittel zugeordnet sind, die Position des Lenkmittels zumindest zwei-stufig angesteuert werden. Die unterschiedlichen Stellwege der Stelleinheiten ermöglichen es jedoch ferner, dass mit zwei Stelleinheiten bereits vier unterschiedliche Stellwege realisiert werden können. Wird die erste Stelleinheit aktiviert, so findet eine Bewegung mit einem ersten Stellweg statt. Wird alternativ die zweite Stelleinheit aktiviert, während die erste Stelleinheit nicht aktiviert ist, folgt eine Bewegung um einen zweiten Stellweg.

Im Gegensatz zu aus dem Stand der Technik bekannten Aktuatoreinrichtungen sind diese Stellwege jedoch unterschiedlich groß, so dass bereits zwei unterschiedliche Bewegungen ausgeführt werden können. Bei den aus dem Stand der Technik bekannten Aktuatoreinrichtungen führt diese alternative Aktuierung nur zu einem gleichen Stellweg. Werden die erste und die zweite Stelleinrichtung aktuiert, wird ein Stellweg realisiert, der sich aus der Summe des ersten und des zweiten Stellweges ergibt. Somit ermöglicht es die erfindungsgemäße Aktuatoreinrichtung bereits bei Einsatz von zwei Stelleinheiten eine dreistufige Bewegung zu realisieren. Unter drei-stufig wird also verstanden, dass entweder eine der beiden Stelleinheiten aktuiert wird, also das jeweilige Stellmittel bestromt oder erhitzt wird, wodurch wahlweise unterschiedliche Stellwege, insbesondere unterschiedliche Bewegungen eines Lenkkörpers, um die Veränderung der Erstreckung des erwärmten bzw. des bestromten Stellmittels resultieren. Werden beide Stelleinheiten aktuiert, insbesondere Stellmittel bestromt oder erwärmt werden, wird ein maximaler Stellweg, insbesondere eine maximale Auslenkung des Lenkkörpers, die aus der Summe der einzelnen maximalen Stellwege beider Stelleinheiten resultiert, erreicht.

Hierdurch ist eine Ausrichtung bzw. ein Einstellen des Rückblickmittels verbessert, insbesondere präzisiert, und der Aufbau des Aktuators vereinfacht.

Weiterhin ist die Einstellbarkeit des Rückblickmittels erweitert. So ergibt sich bei n Stellmitteln, die mechanisch "in Reihe geschaltet sind" 2ⁿ stabile Stellpositionen. Wird der maximale Weg der Stellmittel so begrenzt, dass das n+1-te Stellmittel den doppelten Stellweg des n-ten Stellmittels aufweist, ergibt sich eine Beweglichkeit des Haltemittels mit einer feinen Auflösung des ersten Stellelements.

Es wird also eine "Kaskade", die ein Binärsystem darstellt, realisiert, wobei sich aus n Stelleinheiten 2ⁿ Positionen ergeben. Legt man beispielsweise eine Aktuatoreinrichtung mit drei Stelleinheiten zugrunde und ermöglicht die erste Stelleinheit einen maximalen Stellweg um die Strecke x, beispielsweise 1 mm, die zweite Stelleinheit einen maximalen Stellweg von 2x, beispielsweise 2 mm und die dritte Stelleinheit einen maximalen Stellweg von 2^{2x} also 4x, beispielsweise 4 mm, ergeben sich insgesamt 8 stabile Positionen, nämlich Stellweg 0 mm bis 7 mm, jeweils in einem 1 mm Abstand.

Soll beispielsweise ein Stellweg von 3 mm realisiert werden, werden die erste und zweite Stelleinheit aktuiert, zur Erreichung eines Stellwegs von 4 mm nur die dritte Stelleinheit und zur Realisierung eines Stellwegs von 6 mm die zweite und dritte Stelleinheit. Werden darüber vier Stelleinheiten eingesetzt, ergeben sich schon 16 stabile Stellpositionen während es bei fünf Stelleinheiten schon 32 stabile Stellpositionen sind.

Somit wird eine relativ detaillierte Verstellmöglichkeit mit einem geringen Raster jedoch einem vergleichsweise großen, resultierenden, maximalen Stellweg bereitgestellt. Ähnlich einem Binärcode ergeben sich die einzelnen Verstellwege im Verhältnis der Wertigkeit des Dualsystems.

Um eine schnelle Veränderung des Stellweges in den Einzelschritten zu ermöglichen, ist besonders bevorzugt, dass jede Stelleinheit zumindest zwei Stellmittel umfasst, die eine Veränderung des Stellweges der jeweiligen Stelleinheit in unterschiedliche Richtungen ermöglicht. Soll beispielsweise in dem vorgenannten Beispiel eine Verstellung von 1 mm auf 2 mm erfolgen, so wird bei Deaktivierung der ersten Stelleinheit zunächst ein weiteres Stellmittel in der ersten Stelleinheit aktuiert, dass der Stellweg der ersten Stelleinheit auf 0 mm zurückgefahren wird und gleichzeitig dasjenige Stellmittel der zweiten Stelleinheit aktuiert, was zu einer Einstellung des maximalen Stellwegs von 2 mm in der zweiten Stelleinheit führt. Soll hingegen dann der Stellweg von 2 auf 3 mm erhöht werden, ist lediglich das Stellmittel in der ersten Stelleinheit zu aktuieren, welches die Bewegung der ersten Stelleinheit auf den maximalen Stellweg von 1 mm ermöglicht. Um jedoch ein Stellweg von 0 auf 7 mm zu erreichen, so werden alle drei Stellmittel der drei Stelleinheiten parallel gemeinsam angesteuert, um diesen maximalen Stellweg zu erreichen. Es ist daher vorteilhaft, wenn die mindestens zwei Stelleinheiten, insbesondere deren Stellmittel, gemeinsam oder unabhängig voneinander ansteuerbar oder angesteuert, insbesondere bestrombar und/oder erwärmbar, sind.

Die Ansteuerung erfolgt vorzugsweise über ein Steuergerät, das einen Zähler von 0 bis 2ⁿ+1, mit n gleich der Anzahl der Stelleinheiten aufweist. Je nach Stand des Zählers wird die jeweilige Stelleinheit angesteuert, bei Zähler 1 wird die erste Stelleinheit angesteuert, bei Zähler 2 die zweite Stelleinheit und die erste Stelleinheit wird zurückgefahren, bei Zähler 3 wird die erste und zweite Stelleinheit angesteuert, bei Zähler 4 wird die dritte Stelleinheit angesteuert und die erste und zweite Stelleinheit zurückgefahren, usw. Dies ermöglicht es das Haltemittel langsam ähnlich dem bekannten Motorantrieb in einer weichen Bewegung in die gewünschte Position zu überführen, beispielsweise indem der Zähler langsam von dem Startwert 7 auf den Soll-Wert 3 hinunterzählt.

Das Rückblickmittel kann einen Spiegel oder einer Anzeigeeinrichtung, wie ein Display, umfassen. Auf dem Display sind bspw. durch Sensoren oder Kameras aufgenommene Bilder darstellbar. Auch kann das Rückblickmittel die Kamera umfassen, wobei die Bilder auf einer getrennten Anzeigeeinrichtung angezeigt werden.

Die Anordnung der mindestens zwei Stelleinheiten ist grundsätzlich beliebig. Es erweist sich jedoch als vorteilhaft, wenn die Wirkrichtung mindestens eines der mindestens zwei hintereinander angeordneten Stelleinheiten im Wesentlichen parallel, quer oder schräg zur Ebene des Haltemittels verläuft.

Wenn die mindestens zwei hintereinander angeordneten Stelleinheiten im Wesentlichen parallel bzgl. der Ebene des Haltemittels verlaufen, kann die Aktuatoreinrichtung sowie die Rückblickvorrichtung kompakt, insbesondere flach bzgl. der Ebene des Haltemittels, vorzugsweise fächerhaft, ausgebildet werden. Wenn die mindestens zwei Stelleinheiten im Wesentlichen quer zur Ebene des Haltemittels hintereinander verlaufen, muss durch die Gehäusekomponente quer zur Ebene des Haltemittels ausreichend Bauraum zur Verfügung gestellt werden.

Um ein Verändern der Ausrichtung des Haltemittels zu ermöglichen, ist bei einer Ausführungsform der Aktuatoreinrichtung mindestens eine, insbesondere zapfenartig erstreckte, Lagereinheit vorgesehen, die mit einem Ende an der Gehäusekomponente festlegbar oder festgelegt ist und an deren freiem Ende das platten- oder rahmenartige Haltemittel bewegbar, insbesondere im wesentlichen zentrisch, lagerbar oder gelagert ist.

Um die zapfenartig erstreckt Lagereinheit ist das Haltemittel drehbar, insbesondere kippbar, festlegbar. Grundsätzlich ist es denkbar, dass Kippbewegungen um 360° ermöglicht sind, insbesondere, wenn das Haltemittel im Wesentlichen zentrisch an der zapfenartig erstreckten Lageeinheit festgelegt ist. Darüber hinaus ist es denkbar, dass das Haltemittel exzentrisch an der Lagereinheit festgelegt ist. In beiden Fällen erweist es sich als vorteilhaft, wenn eine im Wesentlichen durch den Schwerpunkt der Lagereinheit verlaufende Querstrebe vorgesehen ist um eine Bewegung auch um diese Achse zu ermöglichen. Auch ist eine Lagerung über ein Kugellager, Kugelgelenk bzw. Kugelelement möglich.

Umfasst die Aktuatoreinrichtung jeweilige Stellkörper, mittels denen die einzelnen Stelleinheiten miteinander verbunden sind, lässt sich auf eine einfache Weise die Begrenzung des Stellweges der jeweiligen Stelleinheit auf den jeweiligen maximalen Stellweg realisieren. So können zwischen den jeweiligen Stellkörpern Anschläge vorgesehen sein, durch die die Begrenzung des Stellweges erreicht wird. So kann der jeweilige Stellkörper ein Langloch aufweisen, in der ein jeweiliger Zapfen eines anderen Stellkörpers bzw. der Gehäusekomponente eingreift. Mittels dieser Konfiguration wird eine Führung des Stellkörpers bzw. seiner Bewegung erreicht und gleichzeitig die Bewegbarkeit entsprechend begrenzt. Durch die Führungsfunktion wird ferner die Stabilität der Aktuatoreinrichtung erhöht und so die Betriebssicherheit sichergestellt. Ferner kann durch die Anschläge sichergestellt werden, dass die Formgedächtniselemente bzw. Stellmittel in einem vorgegebenen Bereich betrieben werden. So kann eine lange Haltbarkeit und gleichbleibende Stellgenauigkeit erreicht werden.

Die Aktuatoreinrichtung umfasst also vorzugsweise mindestens einen Stellkörper, der von einer unbestätigten Grundstellung in eine Arbeitsstellung bewegbar ist, sowie mindestens ein Führungselement zum Führen der Bewegung von der Grundstellung in die Arbeitsstellung, mindestens eine Stellmittelaufnahme zum Festlegen mindestens eines Stellmittels und mindestens ein Koppelelement zum, insbesondere begrenzt bewegbaren, Koppeln des Stellkörpers mit der Gehäusekomponente oder einem weiteren Stellkörper.

Durch den Stellkörper sind die Stellbewegungen der mindestens zwei Stellmittel führbar, wodurch die Stabilität der Aktuatoreinrichtung erhöht ist.

Stellkörper und mechanischer Anschlag können grundsätzlich beliebig ausgebildet sein, solange sie die Aufgabe erfüllen, eine Stellbewegung des Stellkörpers zu führen und/oder in mindestens einer Endstellung zu begrenzen. Stellkörper und mechanischer Anschlag lassen sich besonders einfach und kostengünstig herstellen, wenn die Stellkörperpaare einen Nocken und einen komplementären Langlochabschnitt umfassen.

Bei einer Ausführungsform der Aktuatoreinrichtung ist eine Mehrzahl an Stellkörpern vorgesehen, die fächerartig um eine Lagereinheit bewegbar sind. Diese Gruppe von Stellkörpern mit fächerartig angeordneten Stelleinheiten bilden ein Stellpaket bzw. eine Stellvorrichtung, wobei mindestens ein erster Stellkörper mit seiner als Langloch ausgebildeten Struktur an einem Anschlagelement der Gehäusekomponente anordenbar oder angeordnet ist und wobei eine erste Stelleinheit, insbesondere das erste Stellmittel, zwischen dem Anschlagelement der Gehäusekomponente und einer Stellmittelaufnahme des ersten Stellkörpers erstreckt und/oder mindestens ein zweiter Stellkörper mit seinem als Langloch ausgebildeten Struktur an einem Anschlagelement des ersten Stellkörpers anordenbar oder angeordnet ist und wobei eine zweite Stelleinheit, insbesondere das zweite Stellmittel, sich zwischen dem Anschlagelement des ersten Stellkörpers und einer Stellmittelaufnahme des zweiten Stellkörpers erstreckt ist. Ein oder mehrere dritter Stellkörper kann/können ferner zwischen erster und zweiter Stelleinheit angeordnet werden.

In Ergänzung oder als Alternative kann ein Festlegeelement vorgesehen sein, das zwischen dem zweiten Stellkörper und dem Lenkkörper anordenbar oder angeordnet ist.

Um die Einstellbarkeit der Aktuatoreinrichtung weiter zu verbessern, insbesondere eine dreidimensionale Bewegung zu ermöglichen, sind bei einer Ausführungsform der Aktuatoreinrichtung mindestens zwei Stellvorrichtungen vorgesehen, die im Wesentlichen spiegelsymmetrisch zu einer quer zur Längserstreckungsrichtung der Lagereinheit verlaufenden Spiegelachse am Haltemittel angeordnet sind sowie mindestens zwei Stellvorrichtungen, die im Wesentlichen spiegelsymmetrisch zu einer Längserstreckungsrichtung der Lagereinheit angeordnet sind. Dies ermöglicht die Bewegung, insbesondere Drehung bzw. Kippung, des Haltemittels um zwei orthogonal zueinander verlaufende Achsen und somit eine Ausrichtung des Haltemittels in nahezu jede Raumrichtung.

Das Stellmittel kann grundsätzlich beliebig ausgebildet sein. Es lässt sich besonders einfach und kostengünstig realisieren, wenn das mindestens eine Stellmittel mindestens eine Formgedächtnisfeder umfasst. Unter Formgedächtniselementen (FGE) im Sinne der Erfindung werden Elemente verstanden, die sich auch nach einer Verformung in ihre Ursprungsform "zurückverformen" können. Diese Zurückverformung wird insbesondere durch eine Erwärmung des Elements, beispielsweise durch ein Bestromen, also das Durchleiten eines Gleich- oder Wechselstroms und die dadurch resultierende Erwärmung aufgrund des ohmschen Widerstands ausgelöst. Dazu umfasst das Formgedächtniselement zumindest teilweise eine Formgedächtnislegierung (FGL) bzw. ein shape memory alloy (SMA). Geeignete Formgedächtniselemente sind beispielsweise bereichsweise als Schraubenfedern ausgebildet. Sie können einen Durchmesser von 6mm aufweisen sowie eine Last von 7-10N, beispielsweise ungefähr 8N, bewegen. Dazu kann der Schraubenfederdraht einen Durchmesser von 1mm aufweisen und es können 10 Windungen vorgesehen sein. Das Formgedächtniselement kann je nach Temperatur zwei stabile Zustände aufweisen, beispielsweise einen ersten für Temperaturen von kleiner als 70C°, beispielsweise mit einer Länge der Feder von 25mm, und einen zweiten für Temperaturen von größer als 110C°, beispielsweise mit einer Länge der Feder von 15mm. So ergibt sich eine Hublänge von 10mm bei einer konstanten Last von 8N. Die Länge der nicht federnden Bereiche des Formgedächtniselements können ca. 10mm betragen, so dass sich ein kompakter Aufbau ergibt.

Darüber hinaus erweist es sich als vorteilhaft, wenn mindestens ein Lenkkörper zwei, insbesondere L-förmig zueinander angeordnete, Lenkschenkel umfasst, wenn an mindestens einem ersten Lenkschenkel die zweite Stelleinheit angreift und wenn der zweite Lenkschenkel am Haltemittel festlegbar ist, und/oder wenn der erste Lenkschenkel und der zweite Lenkschenkel an einer gemeinsamen Lenkschenkelachse drehbar anordenbar oder angeordnet sind.

Schließlich kann der mindestens eine Lenkkörper einen Kunststoff, eine Keramik und/oder ein Metall umfassen.

Durch das Vorsehen von mindestens einem Stellkörper, insbesondere von mindestens drei Stellkörpern, können die Stellbewegungen, beim Ansteuern der Stellmittel geführt und begrenzt werden. Hierdurch ist die Stabilität der Aktuatoreinrichtung erhöht.

Die erfindungsgemäße Aktuatoreinrichtung sowie die erfindungsgemäße Rückblickvorrichtung erweisen sich also in mehrfacher Hinsicht als vorteilhaft.

So ist die Aktuatoreinrichtung, im Vergleich zu üblicherweise eingesetzten Motorantrieben, geräuschlos, leichter, flacher und weist keine EMV (Elektromagnetische Verträglichkeit)-Probleme auf.

Weitere Merkmale, Einzelheiten und Vorteile der Erfindung ergeben sich aus den beigefügten Patentansprüchen, aus der zeichnerischen Darstellung und der nachfolgenden Beschreibung bevorzugter Ausführungsformen der Erfindung.

In den Zeichnungen zeigt:
- Figur 1: eine perspektivische Seitenansicht auf eine Aktuatoreinrichtung;
- Figur 2: eine Draufsicht auf eine Stellvorrichtung der Aktuatoreinrichtung gemäß Figur 1;
- Figur 3: eine Draufsicht auf die Aktuatoreinrichtung gemäß Figuren 1 und 2 ohne Lagereinheit;
- Figur 4: eine Seitenansicht der Ansicht gemäß Figur 3;
- Figur 5: eine weitere perspektivische Aufsicht auf die Aktuatoreinrichtung gemäß der ersten Ausführungsform;
- Figur 6: eine schematische Darstellung dreier beispielhafter Stellwege der Stelleinheiten einer Stellvorrichtung der Aktuatoreinrichtung der Figuren 1 bis 5;
- Figur 7: eine perspektivische Aufsicht auf eine Aktuatoreinrichtung gemäß der zweiten Ausführungsform;
- Figur 8: eine zweite perspektivische Aufsicht auf die Aktuatoreinrichtung der Figur 7; und
- Figur 9: eine dritte perspektivische Aufsicht auf die Aktuatoreinrichtung der Figuren 7 und 8.

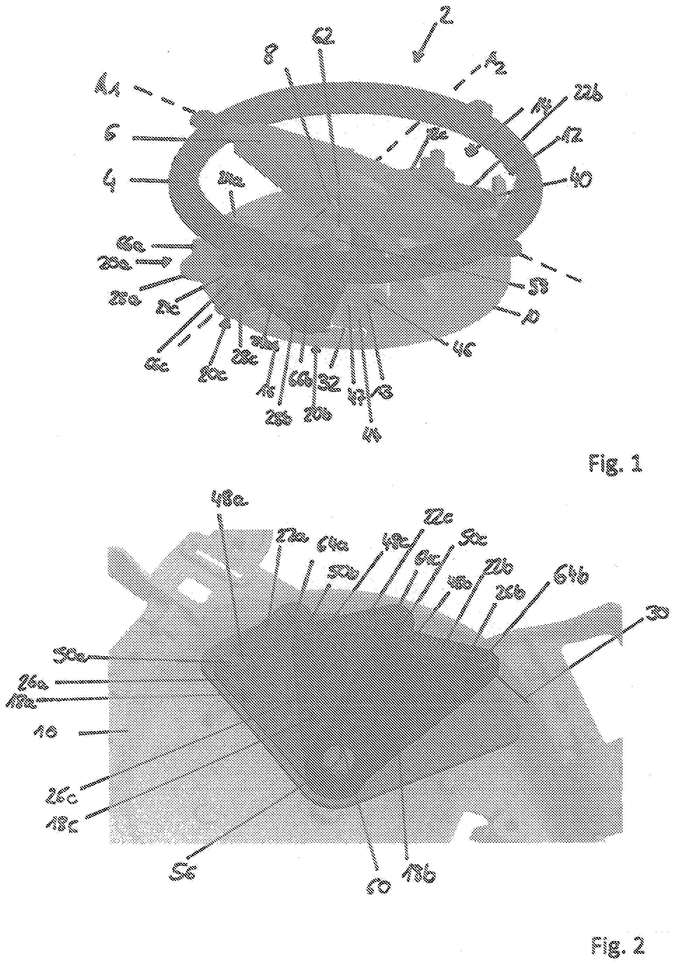

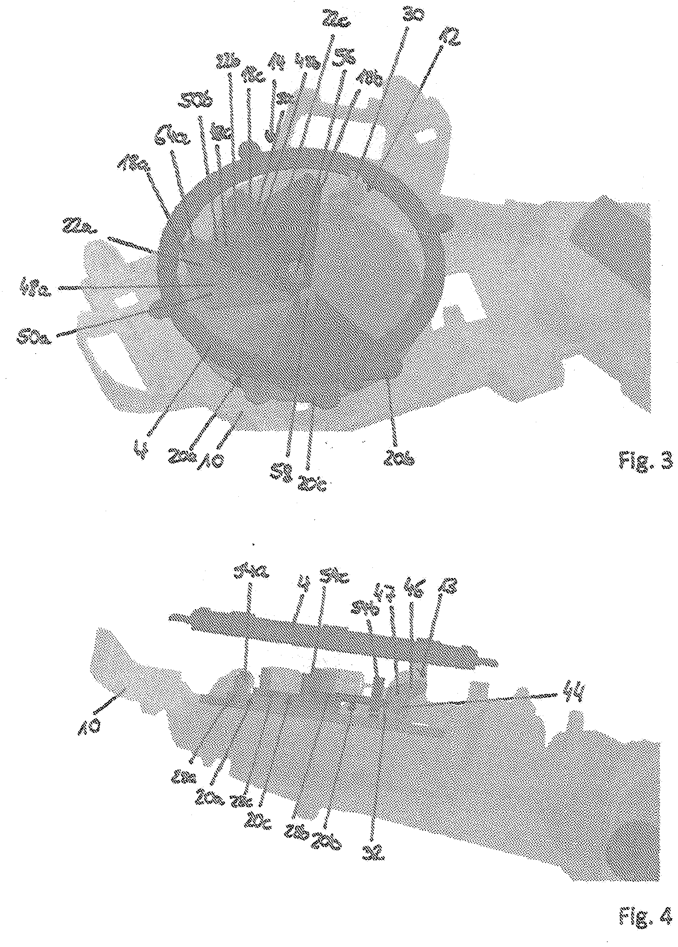

Die Figuren 1 bis 5 zeigen eine insgesamt mit dem Bezugszeichen 2 bezeichnete Aktuatoreinrichtung für eine Rückblickvorrichtung eines Kraftfahrzeugs gemäß einer ersten Ausführungsform. Diese umfasst ein rahmenartiges Haltemittel 4, das bei dem in den Figuren dargestellten Ausführungsbeispiel ringartig ausgebildet ist. An dem Haltemittel 4 ist ein flächenhaftes Rückblickmittel, wie ein Spiegel, ein Display oder aber eine Kamera, festlegbar (in den Figuren nicht dargestellt). Das Haltemittel 4 ist drehbar um eine erste Achse A₁ an einer, insbesondere zapfenartigen, Lagereinheit 6 angeordnet. Die Lagereinheit 6 ist wiederrum um eine zweite Achse A₂ drehbar an einer Querstrebe 8 gelagert. Die Querstrebe 8 ist ortsfest zu einer Gehäusekomponenten 10 der Rückblickvorrichtung angeordnet.

Das Haltemittel 4 ist mittels der Aktuatoreinrichtung 2 um jede der Achsen A₁, A₂ in jeweils acht verschiedene Positionen relativ zu der Gehäusekomponente 10 überführbar, insbesondere drehbar. Hierzu steht das Haltemittel 4 mit Lenkkörpern 12, 13 , durch die eine Stellbewegung zwei Stellvorrichtungen 14,16 auf das Haltemittel 4 übertragbar ist, in Wirkverbindung.

Bei dem in den Figuren 1 bis 5 dargestellten Ausführungsbeispiel umfasst jede Stellvorrichtung 14, 16 jeweils drei Stelleinheiten 18a, 18b, 18c bzw. 20a, 20b, 20c. Jede der Stelleinheit 18a, 18b, 18c bzw. 20a, 20b, 20c umfasst jeweils zumindest ein Stellmittel, wobei die Stellmittel jeweilige Formgedächtniselemente 22a, 22b, 22c bzw. 24a, 24b, 24c umfassen. Die Formgedächtniselemente 22a, 22b, 22c bzw. 24a, 24b, 24c sind in diesem Beispiel als Spiralfederelemente ausgebildet, können aber grundsätzlich jede geeignete Form annehmen. Die Stellvorrichtungen 14, 16 umfassen darüber hinaus jeweils drei Stellkörper 26a, 26b, 26c bzw. 28a, 28b, 28c.

Wie insbesondere Figur 2 zu entnehmen ist, umfasst die Stellvorrichtung 14 eine erste Stelleinheit 18a, eine zweite Stelleinheit 18b und eine mechanisch zwischen der ersten Stelleinheit 18a und zweiten Stelleinheit 18b angeordnete dritte Stelleinheit 18c. Dabei ist ein erstes Stellmittel, das das Formgedächtniselement 22a umfasst, mechanisch zwischen der Gehäusekomponente 10 und einem ersten Stellkörper 26a angeordnet. Das zweite Stellmittel, welches das Formgedächtniselement 22b umfasst, ist mechanisch zwischen dem zweiten Stellkörper 26b und dem dritten Stellkörper 26c angeordnet. Schließlich ist das dritte Stellmittel, welches das Formgedächtniselement 22c umfasst, mechanisch zwischen dem ersten Stellkörper 26a und dem zweiten Stellkörper 26b angeordnet.

Insgesamt ergibt sich daraus, dass die Stelleinheiten mechanisch in der Reihenfolge 18a-18c-18b, die Formgedächtniselemente der Stellmittel mechanisch in der Reihenfolge 22a-22c-22b und die Stellkörper mechanisch in der Reihenfolge 26a-26c-26b in Reihe angeordnet sind. Insbesondere sind die Stellmittel bzw. die Formgedächtniselemente 22a, 22b, 22c bezüglich ihrer Wirkrichtung im Wesentlichen hintereinander und durch die Stellkörper 26a, 26b, 26c mittelbar aneinander festgelegt mechanisch in Reihe geschaltet.

Figur 1 zeigt die Aktuatoreinrichtung 2 in einer seitlichen perspektivische Ansicht. Es ist zu erkennen, dass an der Gehäusekomponente 10 die zwei Stellvorrichtungen 14, 16 angeordnet sind. Dabei ist die zweite Stellvorrichtung 16 im Wesentlichen analog, jedoch spiegelsymmetrisch, zu der ersten Stellvorrichtung 14 aufgebaut.

Die zweite Stellvorrichtung 16 umfasst also die erste Stelleinheit 20a, die zweite Stelleinheit 20b und die dritte Stelleinheit 20c, die in der Reihenfolge 20a-20c-20b mechanisch in Reihe geschaltet sind.

Dabei ist ein erstes Stellmittel umfassend das erste Formgedächtniselement 24a mechanisch zwischen der Gehäusekomponente 10 und einem ersten Stellkörper 28a angeordnet, ein drittes Stellmittel umfassend das dritte Formgedächtniselement 24c mechanisch zwischen dem ersten Stellkörper 28a und dem dritten Stellkörper 28c sowie ein zweites Stellmittel, das das Formgedächtniselement 24b umfasst, mechanisch zwischen dem dritten Stellkörper 28c und dem zweiten Stellkörper 28b angeordnet. Die jeweiligen zweiten Stellkörper 26b und 28b sind mechanisch über zwei Festlegeelemente 30, 32 mit den Lenkkörpern 12, 13 verbunden. Die Festlegeelemente 30, 32 sind beispielsweise als longitudinal bewegbare Hebel bzw. Stangen ausgebildet. Analog den Stellvorrichtungen 14, 16 sind auch die Lenkkörper 12, 13 und Festlegeelemente 30, 32 spiegelsymmetrisch zu der Achse A₁ angeordnet, also auf unterschiedlichen Seiten entlang der Achsen A₂, wenn die Achse A₁ den Nullpunkt der A₂ festlegt.

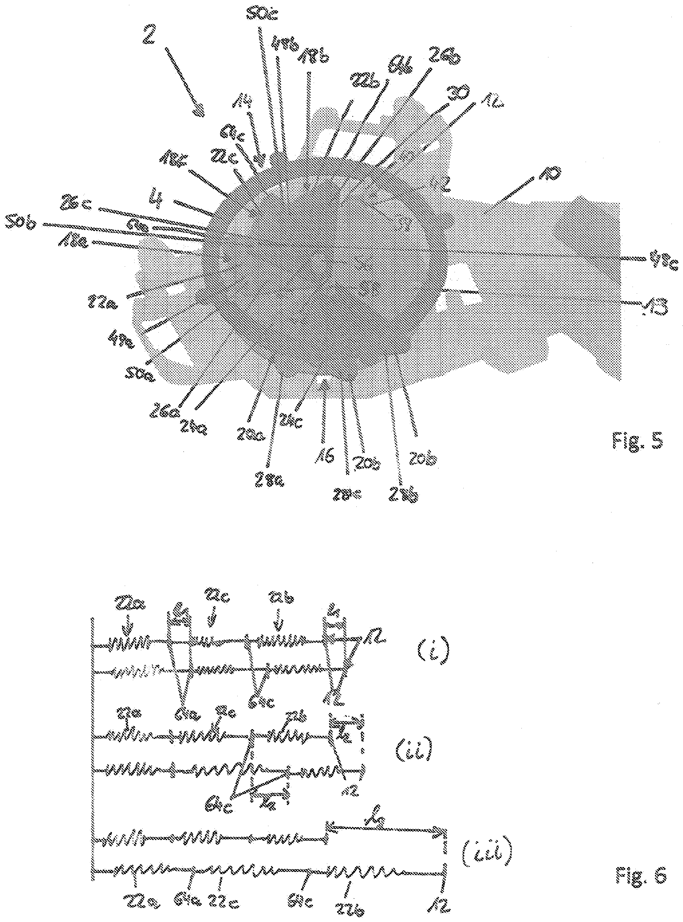

Wie weiterhin Figur 5 zu entnehmen ist, sind die Lenkkörper 12, 13 dabei derart an dem Haltemittel 4 angeordnet, dass das Haltemittel 4 bei einer Übertragung einer Bewegung der Aktuatorelemente 30, 32 an die Lenkkörper 12, 13 sowohl vermittels der Querstrebe 8 um die Achse A₂ als auch um die Achse A₁ mittels der Lagereinheit 6 kippen bzw. drehen kann. Dazu wird eine Bewegung der zweiten Stellkörper 26b, 28b mittels der Festlegeelemente 30, 32 auf die Lenkkörper 12, 13 übertragen.

Um die Stellbewegung der Stelleinheiten 14, 16 auf die Lenkkörper 12, 13 zu übertragen, ist der dem Lenkkörper 12 nächstgelegene zweite Stellkörper 26b der zweiten Stelleinheit 18b der Stellvorrichtung 14 durch das Festlegeelement 30 mit dem Lenkkörper 12 verbunden. Analog ist der Lenkkörper 13 mittels eines Festlegeelements 32 mit dem zweiten Stellkörper 28b der zweiten Stelleinheit 20b der Stellvorrichtung 16 verbunden.

Der zweite Stellkörper 26b ist mit einem ersten Lenkschenkel 38 des Lenkkörpers 12 mittels des Festlegeelements 30 verbunden. Der Lenkkörper 12 weist darüber hinaus einen zweiten Lenkschenkel 40, der an dem Haltemittel 4 festgelegt ist, auf. Der erste Lenkschenkel 38 und der zweite Lenkschenkel 40 des Lenkkörpers 30 sind um eine gemeinsame Lenkschenkelachse 42 drehbar gelagert und L-förmig angeordnet. In analoger Weise weist der Lenkkörper 13 Lenkschenkel 44 und 46 auf, wobei der erste Lenkschenkel 44 über das Festlegeelement 32 mechanisch mit dem zweiten Stellkörper 28b der zweiten Stelleinheit 20b der Stellvorrichtung 16 verbunden ist, während der zweite Lenkschenkel 46 mit dem Haltemittel 4 in Wirkverbindung steht. Der erste Lenkschenkel 44 und der zweite Lenkschenkel 46 bilden ebenfalls ein um eine Lenkschenkelachse 47 drehbares L-förmiges Element.

Figur 2 zeigt eine Draufsicht auf die Stellvorrichtung 14. Die Stellvorrichtung 14 umfasst wie gesagt die Stellkörper 26a, 26b und 26c. Jeder dieser Körper 26a, 26b, 26c weist eine jeweils auch als Führungselement dienenden mechanischen Anschlag auf. In der in den Figuren dargestellten Ausführungsform ist eine jeweilige in dem Stellkörper 26a, 26b, 26c ausgebildete Struktur des mechanischen Anschlags durch ein Langloch 48a, 48b, 48c ausgebildet. Darüber hinaus umfasst der jeweilige mechanische Anschlag ein Anschlagelement, welches in der dargestellten Ausführungsform jeweils als Zapfen 50a, 50b, 50c ausgebildet ist.

Dabei ist ein erstes Anschlagelement in Form des Zapfens 50a ortsfest an der Gehäusekomponente 10 ausgebildet und greift in eine erste Struktur des ersten Stellkörper 26a in Form des Langlochs 48a ein. Ein zweiter mechanischer Anschlag umfasst einen an dem dritten Stellkörper 26c ausgebildeten Zapfen 50c, der in eine zweite Struktur des zweiten Stellkörpers 26b in Form des Langlochs 48b eingreift. Ein dritter mechanischer Anschlag ist durch das ortsfest zu dem ersten Stellkörper 26a angeordnete dritte Anschlagelement in Form des Zapfens 50b, welcher in eine dritte Struktur in Form eines Langlochs 48c, das in dem dritten Stellkörper 26c ausgebildet ist, eingreift, ausgebildet.

Wie später erläutert werden wird, wird durch die Länge oder Dimension der Langlöcher 48a, 48c, 48b der jeweilige maximale Stellweg der ersten Stelleinheit 18a, der zweiten Stelleinheit 18b und der dritten Stelleinheit 18c festgelegt.

Analog weist die zweite Stellvorrichtung 16 bzw. deren Stelleinheiten 20a, 20b und 20c in den Stellkörpern 28a, 28b, 28c ausgebildete Strukturen jeweiliger mechanischer Anschläge in Form von Langlöchern 52a, 52b, 52c sowie an der Gehäusekomponente 10 bzw. den jeweiligen Stellkörpern 28a, 28b, 28c ausgebildete Anschlagelemente in Form der Zapfen 54a, 54b, 54c auf.

Wie darüber hinaus den Figuren 2, 3 und 5 zu entnehmen ist, sind die jeweiligen Stellkörper 26a, 26b, 26c derart an einem Lagerelement 56 bzw. die Stellkörper 28a, 28b, 28c an einem Lagerelement 58 gelagert, dass sie jeweils um eine gemeinsame Lagerachse 60 bzw. 62 drehbar sind. Wie den Figuren 2, 3 und 5 ferner zu entnehmen ist, ist das Formgedächtniselement 22a des ersten Stellmittels bzw. der ersten Stelleinheit 18a der Stellvorrichtung 14 zwischen an der Gehäusekomponente 10 festgelegten Zapfen 50a und einem ersten Stift 64a angeordnet. Das Formgedächtniselement 22c der dritten Stelleinheit 18c ist hingegen mechanisch zwischen dem Zapfen 50b und dem an dem dritten Stellkörper 26c ausgebildeten Stift 64c angeordnet. Das zweite Formgedächtniselement 22b der zweiten Stelleinheit 18b ist mechanisch zwischen dem an dem dritten Stellkörper 26c ausgebildeten Zapfen 50c und dem auf dem zweiten Stellkörper 26b ausgebildeten Stift 64b angeordnet.

In analoger Weise wird das Formgedächtniselement 24a mechanisch zwischen dem Zapfen 54a und dem Stift 66a, das Formgedächtniselement 24c zwischen dem Zapfen 54c und dem Stift 66c sowie das Formgedächtniselement 24b zwischen dem Zapfen 54c und dem Stift 66b mechanisch angeordnet.

Die Stellmittel der Stelleinheiten 18a, 18b, 18c bzw. 20a, 20b, 20c in Form der Formgedächtniselemente 22a, 22b, 22c bzw. 24a, 24b, 24c sind unabhängig voneinander ansteuerbar bzw. aktuierbar, insbesondere durch Erwärmen bzw. Bestromen.

Wie bereits zuvor erwähnt und in Figur 6 dargestellt, wird durch die unterschiedlichen Länge der Langlöcher 48a, 48b, 48c bzw. 52a, 52b, 52c unterschiedliche maximale Stellwege der Stelleinheiten 18a, 18b, 18c bzw. 20a, 20b, 20c festgelegt.

Detaillierter wird diese Kinematik nun anhand der ersten Stellvorrichtung 14 und Figur 6 beschrieben, wobei diese Beschreibung analog für die Stellvorrichtung 16 gilt.

Mittels des Langloches 48a wird ein maximaler Stellweg der Länge l₁, beispielsweise 1 mm, festgelegt. Das bedeutet, dass bei einer Bestromung des Formgedächtniselements 22a der erste Stellkörper 26a um einen Winkel um das Lagerelement 56 gedreht wird, welche eine zirkularen Strecke von l₁ entspricht. Beispielsweise kann es durch die Bestromung des Formgedächtniselementes 22a zu einer Vergrößerung der Länge des Formgedächtniselements 22a kommen. Wird die Bestromung aufgelöst, so verkürzt sich das Formgedächtniselement 22a wieder und eine Rückstellung um die zirkulare Strecke entsprechend l₁ erfolgt.

Das in dem zweiten Stellkörper 26b ausbildete Langloch 48b weist hingegen eine Länge von l₂, beispielsweise 2mm, die einer zirkularen Wegstrecke von l₂ entspricht, auf. Wird also das zweite Formgedächtniselement 22b durch Bestromen aktuiert, kommt es zu einer Bewegung des zweiten Stellkörpers um eine Länge einen maximalen Stellweg l₂, der einer zirkularen Strecke von l₂ um die Achse 56 entspricht.

Schließlich ist das dritte Langloch 48c so dimensioniert, dass Bewegung des dritten Stellkörpers relativ zu dem ersten Stellkörper um eine zirkulare Strecke von l₃, beispielsweise 4 mm, ermöglicht wird. Die Strecke l₃ stellt den dritten maximalen Stellweg dar.

Wie in Figur 6 schematisch dargestellt, führt eine Bestromung des Formgedächtniselements 22c dazu, dass sich der dritte Stellkörper 26c und damit auch das Formgedächtniselement 22b und der zweite Stellkörper 26b durch die Wechselwirkung zwischen dem Zapfen 50c und dem Langloch 48b des mechanischen Anschlags relativ zu dem Grundkörper bewegen.

Dadurch dass die Formgedächtniselement 22a, 22b, 22c unabhängig voneinander bestromt werden können, lassen sich verschiedene Gesamtstellwege l_{g} einstellen. Wird beispielsweise nur das erste Formgedächtniselement 22a durch Bestromen aktuiert, kommt es zu einer Bewegung des ersten Stellkörpers 26a relativ zu der Gehäusekomponente 10, um die zirkulare Wegstrecke l₁. Aufgrund der Verbindung des ersten Stellkörpers 28a mit dem dritten Stellkörper 26c, der wiederum mit dem zweiten Stellkörper 26b verbunden ist, bewegen sich auch die Stellkörper 26c und 26b, um diese zirkulare Wegstrecke, was zu einer Bewegung des Lenkkörpers 12, welcher der zirkularen Wegstrecke von l₁ entspricht, führt. Dies ist in (i) in Figur 6 dargestellt.

Wird jedoch eine Bestromung des ersten Formgedächtniselements 22a nicht durchgeführt, sondern eine Bestromung des Formgedächtniselements 22b, kommt es zu keiner Bewegung des ersten Stellkörpers 26a relativ zu der Gehäusekomponente 10 und auch nicht des dritten Stellkörpers 26c relativ zu dem ersten Stellkörpers 26a bzw. der Gehäusekomponente 10. So erfolgt lediglich eine Bewegung des zweiten Stellkörpers 26b relativ zu dem dritten Stellkörper 26c und damit der Gehäusekomponente 10. Da jedoch der Stellweg der zweiten Stelleinheit l₂, beispielsweise doppelt so groß ist wie der maximale Stellweg l₁ der ersten Stelleinheit 18a, wird der Lenkkörper 12 um einen Winkel, der eine zirkularen Wegstrecke von l₂ entspricht, ausgelenkt. Dies ist in (ii) in Figur 6 dargestellt.

Es sind jedoch nicht nur die Formgedächtniselemente einzeln ansteuerbar, sondern auch eine Kombination der Ansteuerung der Formgedächtniselemente ist möglich. Werden beispielsweise, wie in Figur 6 (iii) dargestellt, alle drei Formgedächtniselemente 22a, 22b, 22c bestromt, so kommt es zu einer Bewegung des Lenkkörpers 30, welcher einer zirkularen Wegstrecke von l_{g}=l₁+l₂+l₃ entspricht, so führt die Bestromung des ersten Formgedächtniselements 22a zu einer Bewegung um eine Strecke von l₁, die Bestromung des zweiten Formgedächtniselements 22c zu einer Bewegung um ein zirkulare Wegstrecke l₂ sowie die Bestromung des dritten Formgedächtniselements 22c zu einer Bewegung um die zirkulare Wegstrecke l₃, die sich aufgrund der Reihenschaltung der Stelleinheiten 18a, 18b, 18c bzw. der Stellkörper 26a, 26b, 26c aufsummieren.

Wird die Bestromung des jeweiligen Formgedächtniselements beendet, kommt es zu einer Verkürzung des entsprechenden Formgedächtniselements und die jeweiligen Zapfen 50a, 50b, 50c gleiten entlang des jeweiligen Langlochs 48a, 48b, 48c in die jeweils gegenüberliegende Entstellung. Geeignete Formgedächtniselemente weisen eine Federwirkung auf, die der Bewegung durch die Aktuation entgegenwirkt.

Obwohl in der vorangehenden Beschreibung lediglich drei Stelleinheiten für eine Stellvorrichtung beschrieben wurden, kann die Anzahl der Stelleinheiten beliebig vergrößert werden. Dazu wird die dritte Stelleinheit jeweils durch zwei bzw. drei dritte Stelleinheiten ersetzt. Vorzugsweise weisen dann die jeweiligen dritten Stelleinheiten untereinander maximale Stellwege auf, die jeweils, vorzugsweise um den Faktor 2, voneinander unterscheiden. Darüber hinaus sind die jeweiligen Stellmittel der dritten Stelleinheiten dann zwischen der ersten Stelleinheit einerseits und der zweiten Stelleinheit andererseits angeordnet, wobei die dritten Stelleinheiten untereinander jeweils erneut in mechanischer Reihe geschaltet sind.

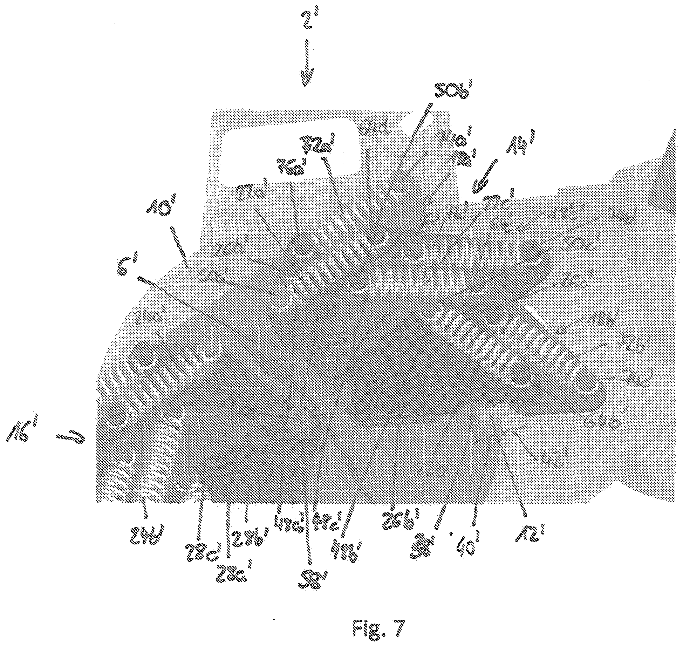

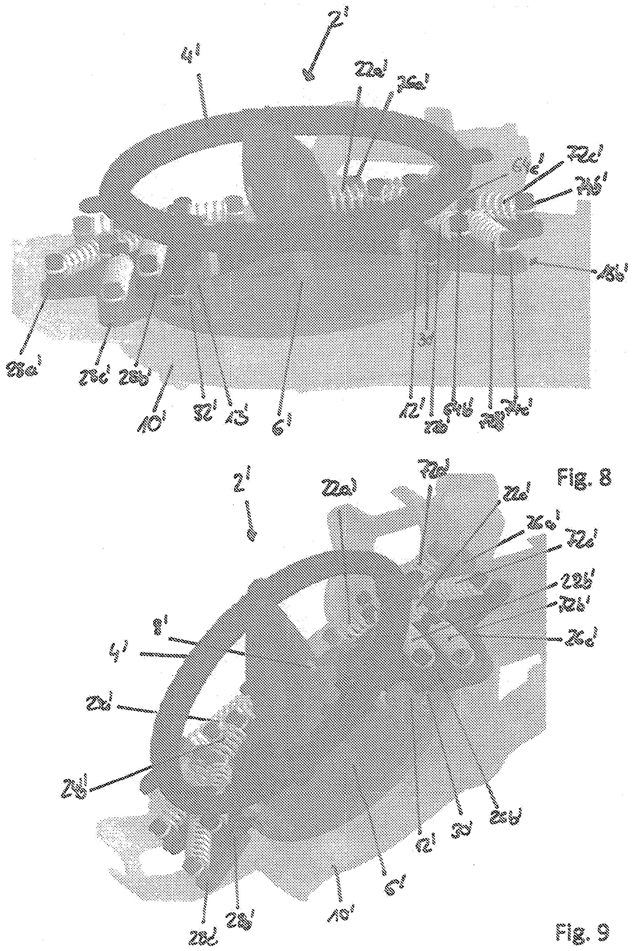

In den Figuren 7 bis 9 ist schließlich eine zweite Ausführungsform einer erfindungsgemäßen Aktuatoreinrichtung 2' dargestellt. Die Aktuatoreinrichtung 2' weist im Wesentlichen einen mit der Aktuatoreinrichtung 2 vergleichbaren Aufbau auf, so dass Elemente der Aktuatoreinrichtung 2', die denjenigen der Aktuatoreinrichtung 2 entsprechen, die gleichen Bezugszeichen tragen, allerdings einfach gestrichen.

Im Gegensatz zu der Aktuatoreinrichtung 2 umfassen jedoch die Stellvorrichtungen 14' und 16' bzw. deren Stelleinheiten 18a', 18b', 18c' jeweils zwei Stellmittel in Form von Formgedächtniselementen. Dabei sind die einzelnen Formgedächtniselemente so zueinander verschaltet, dass ein Formgedächtniselement eine Bewegung der Stelleinheit in eine jeweilige erste Richtung und das weitere Formgedächtniselement eine Bewegung der Stelleinheit in die dazu entgegengesetzte Richtung bewirkt. So ist in den Figuren 7 bis 9 dargestellt, dass die erste Stelleinheit neben dem Formgedächtniselement 22a' das weitere Stellmittel in Form des Formgedächtniselements 72a' umfasst. Das Formgedächtniselement 72a' ist mechanisch zwischen einem Stift 74a', der ortsfest zu der Gehäusekomponente 10 angeordnet ist, und einem Stift 76a', der ortsfest zu dem ersten Stellkörper angeordnet ist, angeordnet. Wird das Formgedächtniselement 22a' aktuiert und somit aus der in Figur 7 dargestellten Position verkürzt, dreht sich der erste Stellkörper 26a' um die Achse 56' und der Zapfen 50a' wandert entlang des Langlochs 48a'. Gleichzeitig kommt es jedoch zu einer Ausdehnung des Formgedächtniselements 72a'. Ist eine Bewegung des Stellkörpers 26a' in die entgegengesetzte Richtung anschließend gewünscht, kommt es zu einer Aktuierung des Formgedächtniselements 72a', welches daraufhin seine Länge wieder verkürzt, wodurch jedoch gleichzeitig das Formgedächtniselement 22a' seine Länge vergrößert und der Zapfen 50a' wieder entlang des Langlochs 48a' bewegt, solange bis die in Figur 7 dargestellte Position wieder erreicht wird. In analoger Weise ist ein weiteres Formgedächtniselement 72b' der zweiten Stelleinheit 18b' zwischen einem an dem dritten Stellkörper 26c' ausgebildeten Stift 74c' und einem an dem zweiten Stellkörper 26b' ausgebildeten Stift 76b' angeordnet. Das Formgedächtniselement 72b' bewirkt eine Bewegung, die der Bewegung des Formgedächtniselements 22b' entgegenwirkt. Schließlich ist ein weiteres Formgedächtniselement 72c', welches der Bewegung des Formgedächtniselements 22c' entgegenwirkt, zwischen einen an dem ersten Stellkörper 26a' ausgebildeten Stift 74b' und dem an dem dritten Stellkörper 26c' ausgebildeten Stift 76c' angeordnet.

Ein Aufbau, wie bei der Aktuatorvorrichtung 2, bei dem durch ein Formgedächtniselement eine Bewegung aus einer ersten Position in eine zweite Position durch Aktuierung des Formgedächtniselements und eine umgekehrte Bewegung durch Beenden der Aktuierung möglich ist, die Notwendigkeit auf, dass eine Verriegelung in der Position vorgesehen werden sollte.

Werden jedoch zwei parallel, jedoch in entgegengesetzte Richtung wirkende Formgedächtniselemente eingesetzt, kann auf eine derartige Verriegelung verzichtet werden, da durch die "one-way" Formgedächtniselemente jeweils stabile Zustände geschaffen werden. Werden Formgedächtniselemente eingesetzt, die eine flache Federkonstante aufweisen, kann das Formgedächtniselement nach einem Abkühlen seine eingestellte Position behalten, jedoch ohne einen hohen Kraftaufwand durch das "Gegen-Formgedächtniselement" wieder in eine Ursprungslage vor einer Bestromung rückgeführt werden.

Bei der in den Figuren 7 bis 9 dargestellten Ausführungsform sind also die Stellkörper 26a', 26b', 26c' bzw. 28a', 28b', 28c' im Vergleich zur Aktuatorvorrichtung 2 leicht abgewandelt. So weisen die Stellkörper die zusätzlichen Stifte 74a', 74b', 74c' sowie 76a', 76b', 76c' auf. Ferner umfasst beispielsweise die zweite Stelleinheit 18c die Formgedächtniselemente 22b' und 72b'.

### Bezugszeichenliste

- 2, 2': Aktuatoreinrichtung
- 4, 4': Haltemittel
- 6, 6': Lagereinheit
- 8: Querstrebe
- 10, 10': Gehäusekomponente

- 12, 12': Lenkkörper
- 13, 13': Lenkkörper
- 14, 14': Stellvorrichtung
- 16, 16': Stellvorrichtung
- 18a,18b, 18c, 18a', 18b', 18c': Stellkörper

- 20a, 20b, 20c: Stelleinheit
- 22a, 22b, 22c, 22a', 22b', 22c': Formgedächtniselement
- 24a, 24b, 24c, 24a', 24b', 24c': Formgedächtniselement
- 26a, 26b, 26c, 26a', 26b', 26c': Stellkörper
- 28a, 28b, 28c, 28a', 28b', 28c': Stellkörper

- 30, 30': Festlegeelement
- 32, 32': Festlegeelement
- 38|: Lenkschenkel

- 40, 40': Lenkschenkel
- 42, 42': Lenkschenkelachse
- 44: Lenkschenkel
- 46: Lenkschenkel
- 47: Lenkschenkelachse
- 48a, 48b, 48c, 48a', 48b', 48c': Langloch

- 50a, 50b, 50c, 50a', 50b', 50c': Zapfen
- 52a, 52b, 52c: Langloch
- 54a, 54b, 54c: Zapfen
- 56, 56': Lagerelement
- 58, 58': Lagerelement

- 60, 60': Lagerachse
- 62, 62': Lagerachse
- 64a, 64b, 64c, 64a', 64b', 64c': Stift
- 66a, 66b, 66c: Stift

- 72a', 72b', 72c': Formgedächtniselement
- 74a', 74b', 74c': Stift
- 76a', 76b', 76c': Stift

- A₁, A₂: Achse

- l₁, l₂, l₃,: Stellweg
- l_{g}: Gesamtstellweg

## Patentansprüche

1. Aktuatoreinrichtung (2, 2') für eine Rückblickvorrichtung, umfassend mindestens ein Haltemittel (4), an dem ein Rückblickmittel festgelegt ist und das relativ zu einer Gehäusekomponente (10, 10') der Rückblickvorrichtung bewegbar gelagert ist, mindestens eine erste Stellvorrichtung (14, 14', 16, 16') umfassend zumindest eine erste Stelleinheit (18a, 18a') mit mindestens einem ersten Stellmittel (22a, 22a') und zumindest eine zweite Stelleinheit (18b, 18b') mit mindestens einem zweiten Stellmittel (22b, 22b') zur Bewegung des Haltemittels (4) relativ zu der Gehäusekomponente (10), wobei das erste Stellmittel und das zweite Stellmittel jeweils zumindest ein Formgedächtniselement (22a, 22a', 22b, 22b') umfassen und die erste Stelleinheit (18a, 18a') und die zweite Stelleinheit (18b, 18b') mechanisch in Reihe geschaltet zwischen der Gehäusekomponente (10) und dem Haltemittel (4) angeordnet sind, wobei die erste Stelleinheit (18a, 18a') einen ersten maximalen Stellweg (l₁) aufweist und die zweite Stelleinheit (18b, 18b') einen von dem ersten maximalen Stellweg (l₁) unterschiedlichen zweiten maximalen Stellweg (l₂) aufweist, ferner umfassend
- zumindest einen ersten Stellkörper (26a), mittels dem die erste Stelleinheit (18a) und die zweite Stelleinheit (18b) zumindest indirekt mechanisch miteinander verbunden sind,
- zumindest einen zweiten Stellkörper (26b), wobei das Haltemittel (4) in mechanischer Verbindung mit dem zweiten Stellkörper (26b) ist bzw. sind
**dadurch gekennzeichnet, dass**
die Bewegbarkeit des ersten Stellkörpers (26a) relativ zu der Gehäusekomponente (10) mittels zumindest eines ersten mechanischen Anschlags (50a, 48a) begrenzt ist und die Bewegbarkeit des zweiten Stellkörpers (26b) relativ zu dem ersten Stellkörper (26a) mittels zumindest eines zweiten mechanischen Anschlags (50c, 48b) begrenzt ist, wobei
der erste mechanische Anschlag zumindest ein ortsfest zu der Gehäusekomponente (10) angeordnetes erstes Anschlagelement (50a), das mit zumindest einer komplementären ersten Struktur (48a) des ersten Stellkörpers (26a) wechselwirkt, umfasst, und der zweite mechanische Anschlag zumindest ein ortsfest zu dem ersten Stellkörper angeordnetes zweites Anschlagelement (50c), das mit zumindest einer komplementären zweiten Struktur (48b) des zweiten Stellkörpers (26b) wechselwirkt, umfasst, wobei das erste Anschlagelement (50a) und das zweite Anschlagelement (50c) jeweils zumindest einen Zapfen umfassen und die erste Struktur und die zweite Struktur jeweils zumindest ein Langloch umfassen.

2. Aktuatoreinrichtung nach Anspruch 1, **dadurch gekennzeichnet, dass**
durch den ersten Stellkörper (26a) das erste Stellmittel (22a) und das zweite Stellmittel (22b) zumindest indirekt mechanisch miteinander verbunden sind, wobei das erste Stellmittel (22a) mechanisch zwischen der Gehäusekomponente (10) und dem ersten Stellkörper (26a) angeordnet ist.

3. Aktuatoreinrichtung nach Anspruch 1 oder 2, **gekennzeichnet durch**
zumindest einen Lenkkörper (12), der mit einem ersten Ende (40) mechanisch mit dem Haltemittel (4) und mit einem zweiten Ende (38) mechanisch mit der ersten Stellvorrichtung (14) verbunden ist, um zumindest eine Stellbewegung der ersten Stellvorrichtung (14) auf das Haltemittel (4) zu übertragen.

4. Aktuatoreinrichtung nach einem der vorangehenden Ansprüche, **dadurch gekennzeichnet, dass**
das zweite Stellmittel (22b) mechanisch zwischen dem ersten Stellkörper (26a) und dem zweiten Stellkörper (26b) angeordnet ist.

5. Aktuatoreinrichtung nach einem der vorangehenden Ansprüche, **dadurch gekennzeichnet, dass**
die erste Stellvorrichtung (14) zumindest eine dritte Stelleinheit (18c) mit zumindest einem dritten, zumindest ein Formgedächtniselement (22c) umfassenden Stellmittel umfasst, wobei die dritte Stelleinheit (18c) mechanisch zwischen der ersten Stelleinheit (18a) und der zweiten Stelleinheit (18b) angeordnet ist.

6. Aktuatoreinrichtung nach Anspruch 5, **dadurch gekennzeichnet, dass**
eine Mehrzahl von dritten Stelleinheiten vorhanden ist und zumindest eine erste dritte Stelleinheit mechanisch zwischen der ersten Stelleinheit und zumindest einer zweiten dritten Stelleinheit angeordnet ist, wobei die zweite dritte Stelleinheit wiederum mechanisch zwischen der ersten dritten Stelleinheit und der zweiten Stelleinheit angeordnet ist,
wobei die dritte Stelleinheit (18c) einen von dem ersten maximalen Stellweg (l₁) und dem zweiten maximalen Stellweg (l₂) unterschiedlichen dritten maximalen Stellweg (l₃) aufweist.

7. Aktuatoreinrichtung nach Anspruch 5 oder 6, **gekennzeichnet durch**
zumindest einen dritten Stellkörper (26c), mittels dem die dritte Stelleinheit (18c) und die zweite Stelleinheit (18b) mechanisch miteinander verbunden sind, wobei der erste Stellkörper (26a) die erste Stelleinheit (18a) und die dritte Stelleinheit (18c) miteinander verbindet

8. Aktuatoreinrichtung nach Anspruch 7, **dadurch gekennzeichnet, dass**
eine Mehrzahl von dritten Stellkörpern vorhanden ist, wobei mittels zumindest eines der dritten Stellkörper zumindest zwei dritte Stelleinheiten mechanisch miteinander verbunden sind.

9. Aktuatoreinrichtung nach Anspruch 7 oder 8, **dadurch gekennzeichnet, dass**
die Bewegbarkeit des dritten Stellkörpers (26c) relativ zu dem ersten Stellkörper (26a) oder die Bewegbarkeit eines ersten dritten Stellkörpers relativ zu zumindest einem zweiten dritten Stellkörper mittels zumindest eines dritten mechanischen Anschlags (50b, 48c) begrenzt ist.

10. Aktuatoreinrichtung nach Anspruch 9, **dadurch gekennzeichnet, dass**
die maximalen ersten, zweiten und/oder dritten Stellwege (l₁, l₂, l₃) sich derartig unterscheiden, dass zumindest zwei maximale Stellwege (l₁, l₂, l₃) sich um den Faktor 2 unterscheiden.

11. Aktuatoreinrichtung nach Anspruch 9 oder 10, **dadurch gekennzeichnet, dass**
der dritte mechanische Anschlag zumindest ein ortsfest zu dem ersten Stellkörper (26a) angeordnetes drittes Anschlagelement (50b), das mit zumindest einer komplementären dritten Struktur (48c) des dritten Stellkörpers (26c) wechselwirkt, umfasst,
der erste dritte mechanische Anschlag zumindest ein ortsfest zu dem ersten Stellkörper angeordnetes erstes drittes Anschlagelement, das mit zumindest einer komplementären ersten dritten Struktur des ersten dritten Stellkörpers wechselwirkt umfasst, oder
der zweite dritte mechanische Anschlag zumindest ein ortsfest zu dem ersten dritten Stellkörper angeordnetes zweites drittes Anschlagelement, das mit zumindest einer komplementären zweiten dritten Struktur des zweiten dritten Stellkörpers wechselwirkt umfasst.

12. Aktuatoreinrichtung nach einem der vorangehenden Ansprüche, **dadurch gekennzeichnet, dass**
das Rückblickmittel mittels der Aktuatoreinrichtung von zumindest einer ersten Position in zumindest eine zweite Position relativ zur Gehäusekomponente (10) bewegbar ist.

13. Aktuatoreinrichtung nach einem der vorangehenden Ansprüche, **dadurch gekennzeichnet, dass**
die erste Stelleinheit (26a') zumindest zwei erste Stellmittel (22a', 72a'), die zweite Stelleinheit (26b') zumindest zwei zweite Stellmittel (22b', 72b') oder, soweit vorhanden , die dritte Stelleinheit (26c') zumindest zwei dritte Stellmittel (22c', 72c') umfasst, wobei mittels der zwei ersten Stellmittel (22a', 72a') der erste Stellweg in unterschiedliche Richtungen veränderbar ist, mittels der zwei zweiten Stellmittel (22b', 72b') der zweite Stellweg in unterschiedliche Richtungen veränderbar ist, oder, soweit vorhanden, mittels der dritten zweiten Stellmittel (22c', 72c') der dritte Stellweg in unterschiedliche Richtungen veränderbar ist.

14. Aktuatoreinrichtung nach einem der vorangehenden Ansprüche, **dadurch gekennzeichnet, dass**
zumindest zwei Stellmittel (22a', 22b', 22c', 72a', 72b', 72c') gemeinsam oder unabhängig voneinander angesteuert sind, wobei zumindest eine Lagereinheit (6) mit einem ersten Ende an der Gehäusekomponente (10) festgelegt ist und an deren freien, dem ersten Ende gegenüberliegenden Ende das Haltemittel (4) mittels der Aktuatoreinrichtung (2) bewegbar gelagert ist.

15. Aktuatoreinrichtung nach einem der vorangehenden Ansprüche, **gekennzeichnet durch** zumindest eine zweite Stellvorrichtung (16).

16. Aktuatoreinrichtung nach Anspruch 15, **dadurch gekennzeichnet, dass** mittels der ersten Stellvorrichtung (14) das Haltemittel (4) um zumindest eine erste Achse (A₁) drehbar ist und mittels der zweiten Stellvorrichtung (16) das Haltemittel um zumindest eine zweite, zur ersten Achse (A₁) orthogonal verlaufende Achse (A₂), drehbar ist.

17. Aktuatoreinrichtung nach Anspruch 15, **dadurch gekennzeichnet, dass**
mittels der ersten Stellvorrichtung (14) das Haltemittel (4) gleichzeitig um die erste Achse (A₁) und die zweite Achse (A₂) drehbar ist und mittels der zweiten Stellvorrichtung (16) das Haltemittel gleichzeitig um die erste Achse (A₁) und die zweite Achse (A₂) drehbar ist, wobei vorzugsweise eine gleichsinnige und/oder spiegelsymmetrische erste Bewegung der ersten Stellvorrichtung (14) in Bezug auf eine zweite Bewegung der zweiten Stellvorrichtung (16) im Vergleich zu der zweiten Bewegung zu einer gegensinnigen Drehung um die erste Achse (A₁) und/oder der zweiten Achse (A₂) führt.

18. Aktuatoreinrichtung nach Anspruch 15, **dadurch gekennzeichnet, dass**
mittels der ersten Stellvorrichtung das Haltemittel in zumindest eine erste Richtung bewegbar ist und mittels der zweiten Stellvorrichtung das Haltemittel in zumindest eine zweite, zur ersten Richtung orthogonale Richtung bewegbar ist.

19. Aktuatoreinrichtung nach Anspruch 15, **dadurch gekennzeichnet, dass** die die erste Stellvorrichtung (14) und die zweite Stellvorrichtung (16) im Wesentlichen spiegelsymmetrisch zu einer quer zur Längsterstreckungsrichtung der Lagereinheit (6) verlaufenden Spiegelachse am Haltemittel (4) angeordnet sind oder die erste Stellvorrichtung (14) und die zweite Stellvorrichtung (16) im Wesentlichen spiegelsymmetrisch zu einer quer zur Längserstreckungsrichtung der Lagereinheit (6) verlaufenden Richtung angeordnet sind.

20. Rückblickvorrichtung für ein Kraftfahrzeug, umfassend zumindest eine Gehäusekomponente (10) und ein mittels zumindest einer Aktuatoreinrichtung (2) relativ zu der Gehäusekomponente (10) bezüglich zumindest einer Raumrichtung bewegbares Haltemittel (4) für zumindest ein Rückblickmittel, **dadurch gekennzeichnet, dass**
als Aktuatoreinrichtung (2) zumindest eine Aktuatoreinrichtung (2) nach einem der vorangehenden Ansprüche eingesetzt ist.

## Claims

1. An actuator device (2, 2') for a rearview device, comprising at least one retaining means (4) on which a rearview means is secured and which is movably mounted relative to a housing component (10, 10') of the rearview device, at least one first adjusting device (14, 14', 16, 16') comprising at least one first adjusting unit (18a, 18a') with at least one first adjusting means (22a, 22a') and at least one second adjusting unit (18b, 18b') with at least one second adjusting means (22b, 22b') for moving the retaining means (4) relative to the housing component (10), wherein the first adjusting means and the second adjusting means each comprise at least one shape-memory element (22a, 22a', 22b, 22b') and the first adjusting unit (18a, 18a') and the second adjusting unit (18b, 18b') are arranged between the housing component (10) and the retaining means (4) so as to be mechanically connected in series, wherein the first adjusting unit (18a, 18a') has a first maximum travel path (l₁), and the second adjusting unit (18b, 18b') has a second maximum travel path (12) which is different from the first maximum travel path (l₁), further comprising
- at least one first adjusting body (26a), by means of which the first adjusting unit (18a) and the second adjusting unit (18b) are at least indirectly mechanically connected to one another,
- at least one second adjusting body (26b), wherein the retaining means (4) is or are in mechanical connection with the second adjusting body (26b),
**characterized in that**
the mobility of the first adjusting body (26a) relative to the housing component (10) is limited by means of at least one first mechanical limit stop (50a, 48a) and the mobility of the second adjusting body (26b) relative to the first adjusting body (26a) is limited by means of at least one second mechanical limit stop (50c, 48b), wherein
the first mechanical limit stop comprises at least one first limit-stop element (50a) which is arranged stationary to the housing component (10) and interacts with at least one complementary first structure (48a) of the first adjusting body (26a), and the second mechanical limit stop comprises at least one second limit-stop element (50c) which is arranged stationary to the first adjusting body and interacts with at least one complementary second structure (48b) of the second adjusting body (26b), wherein the first limit-stop element (50a) and the second limit-stop element (50c) each comprise at least one tappet and the first structure and the second structure each comprise at least one elongated hole.

2. The actuator device according to claim 1, **characterized in that**
the first adjusting means (22a) and the second adjusting means (22b) are at least indirectly mechanically connected to one another by the first adjusting body (26a), wherein the first adjusting means (22a) is mechanically arranged between the housing component (10) and the first adjusting body (26a).

3. The actuator device according to claim 1 or 2, **characterized by**
at least one steering body (12), a first end (40) of which is mechanically connected to the retaining means (4) and a second end (38) of which is mechanically connected to the first adjusting device (14), in order to transmit at least one adjusting movement of the first adjusting device (14) to the retaining means (4).

4. The actuator device according to any one of the preceding claims,
**characterized in that**
the second adjusting means (22b) is mechanically arranged between the first adjusting body (26a) and the second adjusting body (26b).

5. The actuator device according to any one of the preceding claims,
**characterized in that**
the first adjusting device (14) comprises at least one third adjusting unit (18c) with at least one third adjusting means comprising at least one shape-memory element (22c), wherein the third adjusting unit (18c) is mechanically arranged between the first adjusting unit (18a) and the second adjusting unit (18b).

6. The actuator device according to claim 5, **characterized in that**
a plurality of third adjusting units is present and at least one first third adjusting unit is mechanically arranged between the first adjusting unit and at least one second third adjusting unit, wherein the second third adjusting unit is in turn mechanically arranged between the first third adjusting unit and the second adjusting unit,
wherein the third adjusting unit (18c) has a third maximum travel path (l₃) different from the first maximum travel path (l₁) and the second maximum travel path (l₂).

7. The actuator device according to claim 5 or 6, **characterized by**
at least one third adjusting body (26c), by means of which the third adjusting unit (18c) and the second adjusting unit (18b) are mechanically connected to one another, wherein the first adjusting body (26a) connects the first adjusting unit (18a) and the third adjusting unit (18c) to one another.

8. The actuator device according to claim 7, **characterized in that** a plurality of third adjusting bodies is present, wherein at least two third adjusting units are mechanically connected to one another by means of at least one of the third adjusting bodies.

9. The actuator device according to claim 7 or 8, **characterized in that** the mobility of the third adjusting body (26c) relative to the first adjusting body (26a) or the mobility of a first third adjusting body relative to at least one second third adjusting body is limited by means of at least one third mechanical limit stop (50b, 48c).

10. The actuator device according to claim 9, **characterized in that** the maximum first, second and/or third travel paths (l₁, l₂, l₃) differ in such a manner that at least two maximum travel paths (l₁, l₂, l₃) differ by a factor of two.

11. The actuator device according to claim 9 or 10, **characterized in that**
the third mechanical limit stop comprises at least one third limit-stop element (50b) which is arranged stationary to the first adjusting body (26a) and interacts with at least one complementary third structure (48c) of the third adjusting body (26c), the first third mechanical limit stop comprises at least one first third limit-stop element which is arranged stationary to the first adjusting body and interacts with at least one complementary first third structure of the first third adjusting body, or the second third mechanical limit stop comprises at least one second third limit-stop element which is arranged stationary to the first third adjusting body and interacts with at least one complementary second third structure of the second third adjusting body.

12. The actuator device according to any one of the preceding claims,
**characterized in that**
the rearview means is movable from at least one first position into at least one second position relative to the housing component (10) by means of the actuator device.

13. The actuator device according to any one of the preceding claims,
**characterized in that**
the first adjusting unit (26a') comprises at least two first adjusting means (22a', 72a'), the second adjusting unit (26b') comprises at least two second adjusting means (22b', 72b') or, if present, the third adjusting unit (26c') comprises at least two third adjusting means (22c', 72c'), wherein the first travel path can be changed into different directions by means of the two first adjusting means (22a', 72a'), the second travel path can be changed into different directions by means of the two second adjusting means (22b', 72b'), or the third travel path can be changed into different directions by means of the third second adjusting means (22c', 72c'), if present.

14. The actuator device according to any one of the preceding claims,
**characterized in that**
at least two adjusting means (22a', 22b', 22c', 72a', 72b', 72c') are triggered in common or independently of one another, wherein a first end of at least one bearing unit (6) is secured on the housing component (10) and is mounted on the free end of the bearing unit (6) opposite the first end in such a manner that the retaining means (4) is movable by means of the actuator device (2).

15. The actuator device according to any one of the preceding claims, **characterized by** at least one second adjusting device (16).

16. The actuator device according to claim 15, **characterized in that** the retaining means (4) can be rotated by means of the first adjusting device (14) around at least one first axis (A₁) and the retaining means can be rotated by means of the second adjusting device (16) around at least one second axis (A₂) running orthogonally to the first axis (A₁).

17. The actuator device according to claim 15, **characterized in that** the retaining means (4) can be simultaneously rotated around the first axis (A₁) and the second axis (A₂) by means of the first adjusting device (14) and the retaining means (4) can be simultaneously rotated around the first axis (A₁) and the second axis (A₂) by means of the second adjusting device (16), wherein preferably a first movement of the first adjusting device (14) that is in the same direction and/or mirror-symmetric in relation to a second movement of the second adjusting device (16) leads to a rotation in the opposite direction around the first axis (A₁) and/or the second axis (A₂), compared with the second movement.

18. The actuator device according to claim 15, **characterized in that** the retaining means is movable in at least one first direction by means of the first adjusting device and the retaining means is movable in at least one second direction orthogonal to the first direction by means of the second adjusting device.

19. The actuator device according to claim 15, **characterized in that** the first adjusting device (14) and the second adjusting device (16) are arranged on the retaining means (4) substantially mirror-symmetric to a mirror axis running transversely to the longitudinal direction of extension of the bearing unit (6) or the first adjusting device (14) and the second adjusting device (16) are arranged substantially mirror-symmetric to a direction running transversely to the longitudinal direction of extension of the bearing unit (6).

20. A rearview device for a motor vehicle, comprising at least one housing component (10) and a retaining means (4) which is movable by means of at least one actuator device (2) relative to the housing component (10) with respect to at least one spatial direction for at least one rearview means, **characterized in that**
at least one actuator device (2) according to any one of the preceding claims is used as the actuator device (2).

## Revendications

1. Dispositif actionneur (2, 2') pour un dispositif de rétroviseur, comprenant au moins un moyens de retenue (4), auquel un moyen de rétroviseur est fixé et qui est monté mobile par rapport à un composant boîtier (10, 10') du dispositif de rétroviseur, au moins un premier dispositif de réglage (14, 14', 16, 16') comprenant au moins une première unité de réglage (18a, 18a') avec au moins un premier moyen de réglage (22a, 22a') et au moins une deuxième unité de réglage (18b, 18b') avec au moins un deuxième moyen de réglage (22b, 22b') pour le mouvement du moyens de retenue (4) par rapport au composant boîtier (10), le premier moyen de réglage et le deuxième moyen de réglage comprenant chacun au moins un élément à mémoire de forme (22a, 22a', 22b, 22b'), et la première unité de réglage (18a, 18a') et la deuxième unité de réglage (18b, 18b') étant agencées raccordées mécaniquement en série entre le composant boîtier (10) et le moyens de retenue (4), la première unité de réglage (18a, 18a') présentant un premier chemin de réglage maximal (l₁) et la deuxième unité de réglage (18b, 18b') présentant un deuxième chemin de réglage maximal (l₂) différent du premier chemin de réglage maximal (l₁), comprenant en outre
- au moins un premier corps de réglage (26a), au moyen duquel la première unité de réglage (18a) et la deuxième unité de réglage (18b) sont raccordées l'une avec l'autre mécaniquement au moins de manière indirecte,
- au moins un deuxième corps de réglage (26b), le moyens de retenue (4) étant raccordé mécaniquement avec le deuxième corps de réglage (26b),
**caractérisé en ce que**
la mobilité du premier corps de réglage (26a) par rapport au composant boîtier (10) est limitée par au moins une première butée mécanique (50a, 48a), et la mobilité du deuxième corps de réglage (26b) par rapport au premier corps de réglage (26a) est limitée par au moins une deuxième butée mécanique (50c, 48b),
la première butée mécanique comprenant au moins un premier élément de butée (50a) agencé à un emplacement fixe par rapport au composant boîtier (10), qui interagit avec au moins une première structure complémentaire (48a) du premier corps de réglage (26a), et la deuxième butée mécanique comprenant au moins un deuxième élément de butée (50c) agencé à un emplacement fixe par rapport au premier corps de réglage, qui interagit avec au moins une deuxième structure complémentaire (48b) du deuxième corps de réglage (26b), le premier élément de butée (50a) et le deuxième élément de butée (50c) comprenant chacun au moins un tourillon, et la première structure et la deuxième structure comprenant chacune au moins un trou oblong.

2. Dispositif actionneur selon la revendication 1, **caractérisé en ce que** le premier moyen de réglage (22a) et le deuxième moyen de réglage (22b) sont raccordés l'un avec l'autre mécaniquement au moins de manière indirecte par le premier corps de réglage (26a), le premier moyen de réglage (22a) étant agencé mécaniquement entre le composant boîtier (10) et le premier corps de réglage (26a).

3. Dispositif actionneur selon la revendication 1 ou 2, **caractérisé par** au moins un corps de direction (12), qui est raccordé avec une première extrémité (40) mécaniquement avec le moyens de retenue (4) et avec une deuxième extrémité (38) mécaniquement avec le premier dispositif de réglage (14), afin de transférer au moins un mouvement de réglage du premier dispositif de réglage (14) au moyens de retenue (4).

4. Dispositif actionneur selon l'une quelconque des revendications précédentes, **caractérisé en ce que** le deuxième moyen de réglage (22b) est agencé mécaniquement entre le premier corps de réglage (26a) et le deuxième corps de réglage (26b).

5. Dispositif actionneur selon l'une quelconque des revendications précédentes, **caractérisé en ce que** le premier dispositif de réglage (14) comprend au moins une troisième unité de réglage (18c) avec au moins un troisième moyen de réglage comprenant au moins un élément à mémoire de forme (22c), la troisième unité de réglage (18c) étant agencée mécaniquement entre la première unité de réglage (18a) et la deuxième unité de réglage (18b).

6. Dispositif actionneur selon la revendication 5, **caractérisé en ce qu'**une pluralité de troisièmes unités de réglage est présente et au moins une première troisième unité de réglage est agencée mécaniquement entre la première unité de réglage et au moins une deuxième troisième unité de réglage, la deuxième troisième unité de réglage étant à son tour agencée mécaniquement entre la première troisième unité de réglage et la deuxième unité de réglage,
la troisième unité de réglage (18c) présentant un troisième chemin de réglage maximal (l₃) différent du premier chemin de réglage maximal (l₁) et du deuxième chemin de réglage maximal (l₂).

7. Dispositif actionneur selon la revendication 5 ou 6, **caractérisé par** au moins un troisième corps de réglage (26c), au moyen duquel la troisième unité de réglage (18c) et la deuxième unité de réglage (18b) sont raccordées mécaniquement l'une avec l'autre, le premier corps de réglage (26a) raccordant la première unité de réglage (18a) et la troisième unité de réglage (18c) l'une avec l'autre.

8. Dispositif actionneur selon la revendication 7, **caractérisé en ce qu'**une pluralité de troisièmes corps de réglage est présente, au moins deux troisièmes unités de réglage étant raccordées mécaniquement l'une avec l'autre au moyen d'au moins un des troisièmes corps de réglage.

9. Dispositif actionneur selon la revendication 7 ou 8, **caractérisé en ce que** la mobilité du troisième corps de réglage (26c) par rapport au premier corps de réglage (26a) ou la mobilité d'un premier troisième corps de réglage par rapport à au moins un deuxième troisième corps de réglage est limitée par au moins une troisième butée mécanique (50b, 48c).

10. Dispositif actionneur selon la revendication 9, **caractérisé en ce que** le premier, le deuxième et/ou le troisième chemin de réglage maximal (l₁, l₂, l₃) diffèrent de telle sorte qu'au moins deux chemins de réglage maximaux (l₁, l₂, l₃) diffèrent d'un facteur de 2.

11. Dispositif actionneur selon la revendication 9 ou 10, **caractérisé en ce que** la troisième butée mécanique comprend au moins un troisième élément de butée (50b) agencé à un emplacement fixe par rapport au premier corps de réglage (26a), qui interagit avec au moins une troisième structure complémentaire (48c) du troisième corps de réglage (26c),
la première troisième butée mécanique comprend au moins un premier troisième élément de butée agencé à un emplacement fixe par rapport au premier corps de réglage, qui interagit avec au moins une première troisième structure complémentaire du premier troisième corps de réglage, ou
la deuxième troisième butée mécanique comprend au moins un deuxième troisième élément de butée agencé à un emplacement fixe par rapport au premier troisième corps de réglage, qui interagit avec au moins une deuxième troisième structure complémentaire du deuxième troisième corps de réglage.

12. Dispositif actionneur selon l'une quelconque des revendications précédentes, **caractérisé en ce que** le moyen de rétroviseur peut être déplacé au moyen du dispositif actionneur depuis au moins une première position dans au moins une deuxième position par rapport au composant boîtier (10.

13. Dispositif actionneur selon l'une quelconque des revendications précédentes, **caractérisé en ce que** la première unité de réglage (26a') comprend au moins deux premiers moyens de réglage (22a', 72a'), la deuxième unité de réglage (26b') comprend au moyen deux deuxièmes moyens de réglage (22b', 72b)') ou, si elle est présente, la troisième unité de réglage (26c') comprend au moins deux troisièmes moyens de réglage (22c', 72c'), au moyen des deux premiers moyens de réglage (22a', 72a'), le premier chemin de réglage pouvant être modifié dans différentes directions, au moyen des deux deuxièmes moyens de réglage (22b', 72b'), le deuxième chemin de réglage pouvant être modifié dans différentes directions, ou, s'ils sont présents, au moyen des troisièmes deuxièmes moyen de réglage (22c', 72c'), le troisième chemin de réglage pouvant être modifié dans différentes directions.

14. Dispositif actionneur selon l'une quelconque des revendications précédentes, **caractérisé en ce qu'**au moins deux moyens de réglage (22a', 22b', 22c', 72a', 72b', 72c') sont commandés ensemble ou indépendamment l'un de l'autre, au moins une unité de palier (6) étant fixée avec une première extrémité au composant boîtier (10), et le moyens de retenue (4) étant monté mobile au moyen du dispositif actionneur (2) sur son extrémité libre, opposée à la première extrémité.

15. Dispositif actionneur selon l'une quelconque des revendications précédentes, **caractérisé par** au moins un deuxième dispositif de réglage (16).

16. Dispositif actionneur selon la revendication 15, **caractérisé en ce qu'**au moyen du premier dispositif de réglage (14), le moyens de retenue (4) est rotatif autour d'au moins un premier axe (A₁) et, au moyen du deuxième dispositif de réglage (16), le moyens de retenue est rotatif autour d'au moins un deuxième axe (A₂), orthogonal au premier axe (A₁).

17. Dispositif actionneur selon la revendication 15, **caractérisé en ce qu'**au moyen du premier dispositif de réglage (14), le moyens de retenue (4) est rotatif simultanément autour du premier axe (A₁) et du deuxième axe (A₂) et, au moyen du deuxième dispositif de réglage (16), le moyens de retenue est rotatif simultanément autour du premier axe (A₁) et du deuxième axe (A₂), un premier mouvement préférablement dans le même sens et/ou à symétrie miroir du premier dispositif de réglage (14) par rapport à un deuxième mouvement du deuxième dispositif de réglage (16) en comparaison du deuxième mouvement conduisant à une rotation dans le sens opposé autour du premier axe (A₁) et/ou du deuxième axe (A₂).

18. Dispositif actionneur selon la revendication 15, **caractérisé en ce qu'**au moyen du premier dispositif de réglage, le moyens de retenue peut être déplacé dans au moins une première direction et, au moyen du deuxième dispositif de réglage, le moyens de retenue peut être déplacé dans au moins une deuxième direction, orthogonale à la première direction.

19. Dispositif actionneur selon la revendication 15, **caractérisé en ce que** le premier dispositif de réglage (14) et le deuxième dispositif de réglage (16) sont agencés sur le moyens de retenue (4) essentiellement selon une symétrie miroir par rapport à un axe miroir transversal à la direction d'extension longitudinale de l'unité de palier (6), ou le premier dispositif de réglage (14) et le deuxième dispositif de réglage (16) sont agencés essentiellement selon une symétrie miroir par rapport à une direction transversale à la direction d'extension longitudinale de l'unité de palier (6).

20. Dispositif de rétroviseur pour un véhicule à moteur, comprenant au moins un composant boîtier (10) et un moyens de retenue (4) pour au moins un moyen de rétroviseur, pouvant être déplacé au moyen d'au moins un dispositif actionneur (2) par rapport au composant boîtier (10) au regard d'au moins une direction de l'espace, **caractérisé en ce qu'**au moins un dispositif actionneur (2) selon l'une quelconque des revendications précédentes est utilisé en tant que dispositif actionneur (2).
